# EUROPEAN PATENT SPECIFICATION

(11) **EP 2 629 262 B1**
(45) Date of publication and mention of the grant of the patent: **20.03.2024**
(21) Application number: 11832509.1
(22) Date of filing: 11.10.2011
(51) Int. Cl.: G06T 7/00, G06T 1/00, G01N 21/88

(54) **IMAGE PROCESSOR AND IMAGE PROCESSING METHOD**
BILDPROZESSOR UND BILDVERARBEITUNGSVERFAHREN
PROCESSEUR D'IMAGE ET PROCÉDÉ DE TRAITEMENT D'IMAGE

(30) Priority: 13.10.2010 JP 2010230519
(43) Date of publication of application: 21.08.2013
(73) Proprietor: Omron Corporation, Kyoto-shi, Kyoto 600-8530 (JP)
(72) Inventor: YAMAMOTO, Yoshihide, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2011/073301
(87) International publication number: WO 2012/050074

(56) References cited:
- JP-A- 8 101 913
- US-A- 6 115 042
- US-A1- 2009 169 117
- US-B1- 6 349 144
- Mithun George Jacob: "AUTOMATED VISION-BASED QUALITY INSPECTION OF BOTTLES FOR THE WATER BOTTLING INDUSTRY", , 1 May 2007 (2007-05-01), pages 1-94, XP055185704, Retrieved from the Internet: URL:http://www.mithunjacob.com/timeline/vi t_thesis.pdf [retrieved on 2015-04-24]
- MAGEE M ET AL: "MULTIDIMENSIONAL PATTERN CLASSIFICATION OF BOTTLES USING DIFFUSE AND SPECULARILLUMINATION", PATTERN RECOGNITION, ELSEVIER, GB, vol. 26, no. 11, 1 November 1993 (1993-11-01), pages 1639-1654, XP000421517, ISSN: 0031-3203, DOI: 10.1016/0031-3203(93)90019-S

## Description

### TECHNICAL FIELD

The present invention relates to an image processing apparatus and an image processing method, executing image processing on each of a plurality of process target areas defined for an input image.

### BACKGROUND ART

Conventionally, in a field of FA (Factory Automation) and the like, an image processing apparatus picking-up an image of an item to be measured (hereinafter also referred to as a "work") as an input image, and executing image processing on a prescribed target area of processing of the input image has been generally used. A typical example of such image processing includes a matching process based on a pattern (hereinafter also referred to as a "model") registered in advance (hereinafter also referred to as "pattern matching"). By the pattern matching process, it is possible to detect any defect such as a scratch or dust appearing on a work, or to detect an area similar to the model on a work. The process of inspecting or specifying works using results of such image processing will be hereinafter also generally referred to as "measurement process."

Japanese Patent Laying-Open No. 2009-111886 (PTL 1) discloses an example of pattern matching process. In the image processing apparatus disclosed in PTL 1, it is possible to search for an area matching a pre-registered model in an input image.

An example of application in the FA field involves inspection of each set of a plurality of works arranged regularly. In such a situation, if input images are to be acquired by picking-up images of the works one by one in order, a series of operations including moving, positioning and acquiring an input image of the optical system and/or work must be repeated a large number of times, which takes considerable time.

Therefore, it is a general practice in a measurement process not requiring higher resolution to acquire an input image of a whole set including a plurality of works collectively in one image-pick-up range, and on the thus acquired input image, to execute the measurement process for each of the works within the range.

By way of example, Japanese Patent Laying-Open No. 07-078257 (PTL 2) discloses a method of searching for a plurality of works in one search range. Japanese Patent Laying-Open No. 2009-300431 (PTL 3) discloses a method of inspecting shapes enabling accurate defect inspection even if image patterns representing repetitive patterns include noise.

US Patent 6,115,042 (PTL 4) discloses a graphical user interface for a computer program that enables a user to define a model representing a predefined ideal pattern of objects.

US Patent 6,349,144 B1 (PTL 5) discloses a segmentation method of a frame of image information including a plurality of spaced DNA spot images corresponding to a plurality of DNA spots. The image information includes image intensity level information corresponding to said DNA spots. The frame is stored in a memory device and a set of image information within said frame including a selected set of the DNA spot images is selected. A grid including a plurality of spaced grid points corresponding to said selected DNA spot images is generated, such that each grid point includes position information indicating the position of the grid point within said frame.

### CITATION LIST

### PATENT LITERATURE

PTL 1: Japanese Patent Laying-Open No. 2009-111886
PTL 2: Japanese Patent Laying-Open No. 07-078257
PTL 3: Japanese Patent Laying-Open No. 2009-300431
PTL 4: US Patent 6,115,042
PTL 5: US Patent 6,349,144 B1

### SUMMARY OF INVENTION

### TECHNICAL PROBLEM

Despite such prior art techniques as described above, appropriate measurement process has been difficult where a plurality of works is arranged regularly. Specifically, if the search process disclosed in PTL 1 is used, it is often the case that a plurality of positions of one same work are detected to be matching the model, and it has been difficult to determine whether or not there are products (works) of the number that should be packed in one package. Further, it is necessary to independently set models of the number to be detected in one same input image and, hence, the setting procedure takes much time.

Further, the method disclosed in PTL 2 is for evaluating each work, and the process for evaluating a plurality of works as a whole is complicated.

In the method disclosed in PTL 3, inspection areas having repetitive patterns are automatically divided. The automatic division, however, takes long time and automatic division may fail. If the automatic division fails, the measurement process is stopped even though the number and position of arrangement of products are known, possibly lowering the production yield. Further, if a product (work) to be included in one package is missing, though such absence must be detected, it is not an object of automatic division and, hence, detection is impossible. Further, the method disclosed in PTL 3 is not intended to evaluate a plurality of works as a whole.

An object of the present invention is to provide an image processing apparatus and an image processing method, enabling execution of an appropriate measurement process of a work where a plurality of objects as targets of image processing are arranged regularly in an input image.

### SOLUTION TO PROBLEM

According to an aspect, the present invention provides an image processing apparatus having the features of claim 1.

More preferably, the results of determination of respective ones of the plurality of process target areas are output by making the manner of display different on the input image.

Preferably, the image processing apparatus further receives a setting related to activation or inactivation of each of the plurality of process target areas, as an object of execution of the image processing. On the process target area inactivated as the object of execution of the image processing, among the plurality of process target areas, the image processing is skipped.

More preferably, the image processing apparatus displays the input image and the plurality of process target areas set for the input image. A selected process target area among the plurality of process target areas is specified in response to an input from an input device in connection with a display position, and whether the process target area is to be activated or inactivated as an object of executing the image processing is determined.

Preferably, the image processing apparatus defines the plurality of process target areas on the input image such that neighboring process target areas satisfy the received setting.

More preferably, the plurality of process target areas on the input image are re-defined at least when a new setting of the reference area is received or when a new setting for regularly defining the plurality of process target areas is received.

More preferably, the plurality of process target areas are defined in a matrix of rows and columns with respect to the reference area having a rectangular shape.

Alternatively, or more preferably, the plurality of process target areas is defined in a zigzag alignment.

Alternatively, or more preferably, the plurality of process target areas is defined, inscribed in the reference area set to have any shape, not to overlap with each other.

Alternatively, or more preferably, the plurality of process target areas is radially defined, with a point in the reference area being the center.

Preferably, the image processing includes a matching process using a single model registered in advance.

According to another aspect, the present invention provides an image processing method having the features of claim 10.

### ADVANTAGEOUS EFFECTS OF INVENTION

According to the present invention, an appropriate measurement process can be executed on a work where objects as targets of image processing are arranged regularly on an input image.

### BRIEF DESCRIPTION OF DRAWINGS

Fig. 1 is schematic diagram showing an overall configuration of a visual sensor system including an image processing apparatus in accordance with an embodiment of the present invention.
Fig. 2 is a schematic diagram showing works as the target of visual sensor system including the image processing apparatus in accordance with the embodiment of the present invention.
Fig. 3 is a schematic diagram showing a configuration of the image processing apparatus in accordance with the embodiment of the present invention.
Fig. 4 is a flowchart representing overall process procedure executed by the image processing apparatus in accordance with the embodiment of the present invention.
Fig. 5 shows an example of a user interface screen image related to a model registration process provided by the image processing apparatus in accordance with the embodiment of the present invention.
Fig. 6 shows an example of a user interface screen image related to an area setting process provided by the image processing apparatus in accordance with the embodiment of the present invention.
Fig. 7 shows an example of a user interface screen image related to a matrix setting process provided by the image processing apparatus in accordance with the embodiment of the present invention.
Fig. 8 shows an example of a user interface screen image related to a matrix setting process provided by the image processing apparatus in accordance with the embodiment of the present invention.
Fig. 9 shows an example of a user interface screen image related to a matrix setting process provided by the image processing apparatus in accordance with the embodiment of the present invention.
Fig. 10 shows an example of a user interface screen image related to a measurement parameter setting process provided by the image processing apparatus in accordance with the embodiment of the present invention.
Fig. 11 shows an example of a user interface screen image related to an output parameter setting process provided by the image processing apparatus in accordance with the embodiment of the present invention.
Fig. 12 is a schematic illustration representing a process executed in an "operation mode" of the image processing apparatus in accordance with the embodiment of the present invention.
Fig. 13 shows an example of a user interface screen image provided in the "operation mode" by the image processing apparatus in accordance with the embodiment of the present invention.
Fig. 14 shows an example of a user interface screen image related to a setting of process target areas provided by the image processing apparatus in accordance with a first modification of the embodiment of the present invention.
Fig. 15 is a schematic illustration showing an example of works as the target of image processing apparatus in accordance with a second modification of the embodiment of the present invention.
Fig. 16 shows an example of a user interface screen image related to a setting of process target areas provided by the image processing apparatus in accordance with the second modification of the embodiment of the present invention.
Fig. 17 shows an example of a user interface screen image related to a setting of process target areas provided by the image processing apparatus in accordance with a third modification of the embodiment of the present invention.
Fig. 18 shows an example of a user interface screen image related to a setting of process target areas provided by the image processing apparatus in accordance with a fourth modification of the embodiment of the present invention.

### DESCRIPTION OF EMBODIMENTS

Embodiments of the present invention will be described in detail with reference to the figures. The same or corresponding portions in the figures will be denoted by the same reference characters and description thereof will not be repeated.

### «A. Outline»

In the image processing apparatus in accordance with the present embodiment, a plurality of process target areas are set for an input image. The image processing apparatus executes image processing (measurement process) on each of the set plurality of process target areas, and outputs a result of overall process reflecting the results of image processing of respective process target areas.

In response to the setting of a reference area, the image processing apparatus in accordance with the present embodiment regularly defines the plurality of process target areas based on the reference area. In this manner, conditions regarding image processing related to a plurality of works can be set simultaneously and, by way of example, the process target areas corresponding to the plurality of works respectively can be subjected to image processing independently from each other. Thus, condition setting can be simplified, and the measurement process can be executed appropriately.

### «B. Overall Configuration of the Apparatus»

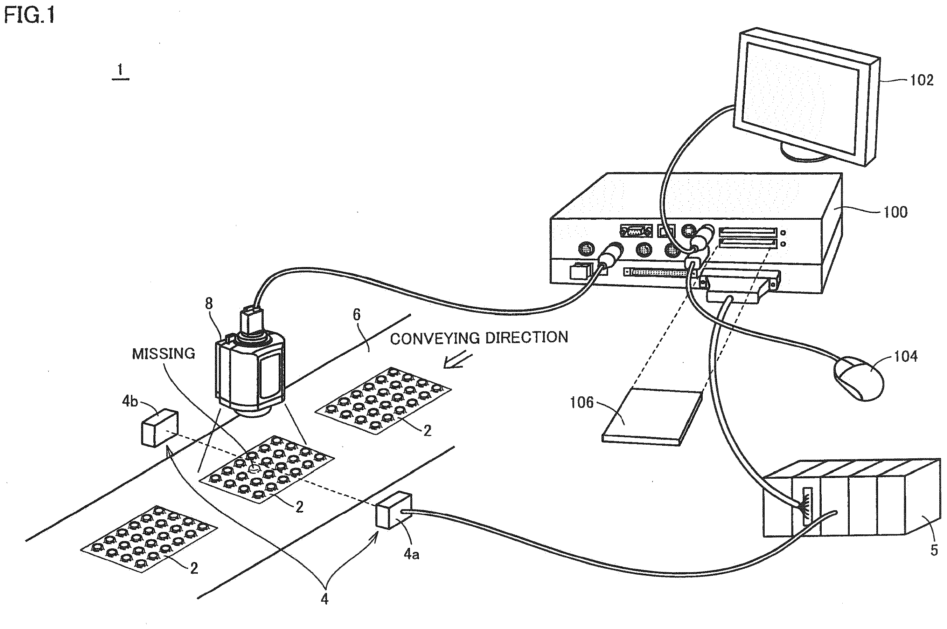

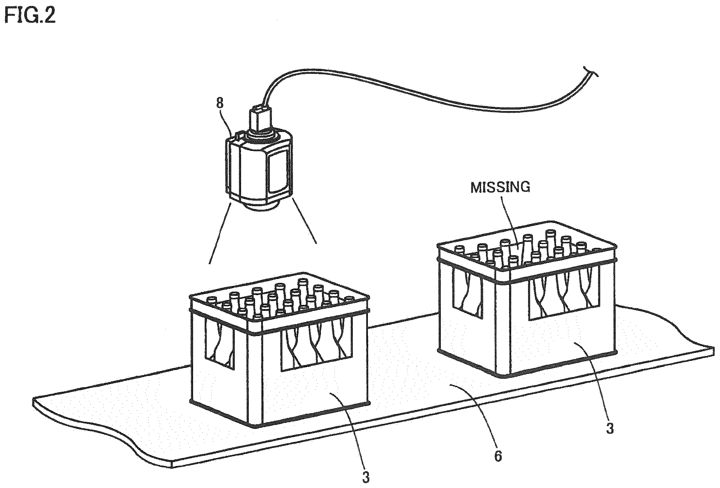

Fig. 1 is a schematic diagram showing an overall configuration of a visual sensor system 1 including an image processing apparatus 100 in accordance with the present embodiment. Fig. 2 is a schematic diagram showing an example of works as the target of visual sensor system 1 including image processing apparatus 100 in accordance with the present embodiment.

Referring to Fig. 1, visual sensor system 1 is incorporated in a production line and executes the measurement process on work set 2. Visual sensor system 1 in accordance with the present embodiment is adapted to the measurement process for the work set, in which a plurality of works is arranged regularly.

The measurement process executed by image processing apparatus 100 in accordance with the present embodiment typically includes a search process and a labeling process. The search process refers to a process of registering beforehand a characteristic portion of a work as an image pattern (model), and searching for a portion closest to the pre-registered model from the input image. Here, the position, inclination and an angle of rotation of the portion closest to the model as well as a correlation value representing how close or similar the portion is to the model are calculated. In the labeling process, a portion that matches a pre-registered model or a display attribute (such as color) is searched out from the input image and a label (number) is added to the searched out portion. Using such a number, the area or a position of center of gravity, for example, of the designated portion is calculated in response to a designation of the number.

Fig. 1 shows an example of an inspection line for a press through package (hereinafter also referred to as "PTP") packing tablets, as a typical example. In such an inspection line, each tablet packed in the PTP as an example of work set 2 corresponds to a work. Determination is made as to whether or not a prescribed number of tablets (works) are packed in each PTP, or whether or not an unintended tablet should be mixed. For instance, Fig. 1 shows a state in which, though each PTP should pack 4 × 6 tablets, one tablet is missing. In the visual sensor system in accordance with the present embodiment, image pick-up takes place such that an image corresponding to at least one PTP is covered by one input image and the measurement process is executed on the input image as such, so that missing of the tablet shown in Fig. 1 can be detected.

Fig. 2 shows another example of application. In the example shown in Fig. 2, a plurality of beverage bottles put in crates 3 are the targets of measurement. For instance, the system is applied to a line of inspecting before shipment whether or not each crate 3 contains a prescribed number of beer bottles. Fig. 2 shows an example in which one bottle is missing in crate 3 on the right side of the figure. Visual sensor system 1 in accordance with the present embodiment detects even such missing or absence of object in accordance with a logic that will be described later.

In this manner, image processing apparatus 100 in accordance with the present embodiment executes image processing (measurement process) for each of the plurality of process target areas (that is, objects) defined for the input image, and outputs a result of overall processing reflecting the results of image processing (measurement processes) on the plurality of process target areas (objects).

Next, specific configurations of visual sensor system 1 and image processing apparatus 100 included therein will be described.

Again referring to Fig. 1, in visual sensor system 1, work set 2 is conveyed by a conveyer mechanism 6 such as a belt conveyor, and an image of the conveyed work set 2 is picked-up at a prescribed timing by an image pick-up device 8. By way of example, image pick-up device 8 is formed including image pick-up elements partitioned to a plurality of pixels such as CCD (Charge Coupled Device) or CMOS (Complementary Metal Oxide Semiconductor) sensors, in addition to an optical system such as lenses. An illumination mechanism for irradiating work set 2 of which image is to be picked-up by image pick-up device 8 with light may additionally be provided.

The image (input image) picked-up by image pick-up device 8 is transmitted to image processing apparatus 100. Image processing apparatus 100 executes the pattern matching process on the input image received from image pick-up device 8, and displays the result on a display 102 connected thereto, or outputs the result to an external device.

That the work set 2 has entered field of view of image pick-up device 8 can be detected by photo-electric sensor 4 arranged at opposite sides of conveyer mechanism 6. Specifically, photo-electric sensor 4 includes a light receiving unit 4a and a light emitting unit 4b arranged on the same optical axis, and when the light emitted from light emitting unit 4b is intercepted by work set 2, the interception is detected by light receiving unit 4a and, thus, arrival of work set 2 is detected. A trigger signal of photo-electric sensor 4 is output to a PLC (Programmable Logic Controller) 5.

PLC 5 receives the trigger signal from photo-electric sensor 4 and the like, and controls conveyer mechanism 6.

Image processing apparatus 100 has a measurement mode for executing various image processing operations on work set 2 and a setting mode for executing, for example, a model registration process, as will be described later. These modes can be switched by a user by operating, for example, a mouse 104.

Image processing apparatus 100 is typically a computer having a general architecture and attains various functions as will be described later by executing a preinstalled program or programs (instruction codes). Such programs are typically distributed stored in, for example, a memory card 106.

When such a general purpose computer is used, OS (Operating System) for providing basic functions of the computer may be installed, in addition to the application or applications to provide the functions related to the present embodiment. In that case, the program in accordance with the present embodiment may be one that calls necessary modules in a prescribed order at prescribed timings to execute processes, from program modules provided as a part of the OS. Specifically, the program itself for the present embodiment may not include the modules as mentioned above, and the processes may be executed in cooperation with the OS. The program in accordance with the present embodiment may not include some modules as such.

Further, the program in accordance with the present embodiment may be provided incorporated as a part of another program. In that case also, the program itself does not include the modules included in the said another program in which it is incorporated, and the processes are executed in cooperation with the said another program. Specifically, the program in accordance with the present embodiment may be in the form of a program incorporated in another program. Some or all of the functions provided by executing the program may be implemented by dedicated hardware.

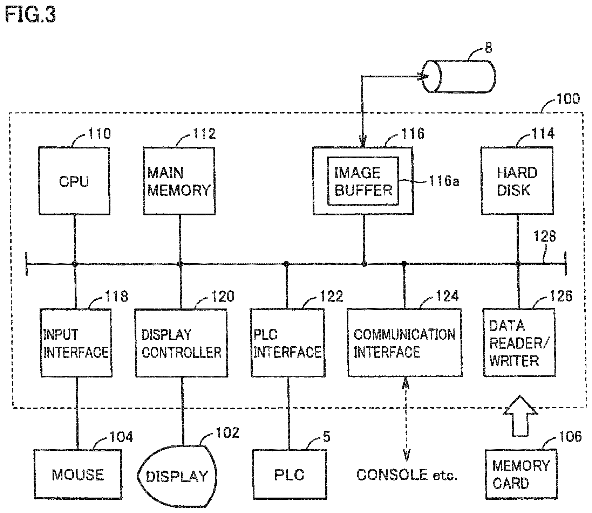

Fig. 3 is a schematic diagram showing a configuration of image processing apparatus 100 in accordance with the embodiment of the present invention. Referring to Fig. 3, image processing apparatus 100 includes a CPU (Central Processing Unit) 110 as an arithmetic operation unit, a main memory 112 and a hard disk 114 as storage units, a camera interface 116, an input interface 118, a display controller 120, a PLC interface 122, a communication interface 124 and a data reader/writer 126. These units are connected to allow data communication with each other through a bus 128.

CPU 110 develops programs (codes) stored in hard disk 114 on main memory 112 and executes these programs to realize various operations. Main memory 112 is typically a volatile storage device such as a DRAM (Dynamic Random Access Memory), and it holds, in addition to the programs read from hard disk 114, image data acquired by image pick-up device 8, work data, information related to models and the like. Further, hard disk 114 may store various setting values. In addition to or in place of hard disk 114, a semiconductor storage device such as a flash memory may be used.

Camera interface 116 is for mediating data transmission between CPU 110 and image pick-up device 8. Specifically, camera interface 116 is connected to image pick-up device 8 for picking-up an image of work set 2 and for generating image data. More specifically, camera interface 116 is connectable to one or more image pick-up devices 8, and includes an image buffer 116a for temporarily storing image data from image pick-up device 8. When image data of a prescribed number of frames are accumulated in image buffer 116a, camera interface 116 transfers the accumulated data to main memory 112. Further, camera interface 116 issues an image pick-up command to image pick-up device 8 in accordance with an internal command generated by CPU 110.

Input interface 118 is for mediating data transmission between CPU 110 and the input unit such as mouse 104, a keyboard or a touch-panel. Specifically, input interface 118 receives an operation command given by the user operating the input unit.

Display controller 120 is connected to a display 102 as a typical example of a display device, and notifies the user of results of image processing by CPU 110 and the like. Specifically, display controller 120 is connected to display 102 and controls display on display 102.

PLC interface 122 is for mediating data transmission between CPU 110 and PLC 5. More specifically, PLC interface 122 transmits information related to the state of production line controlled by PLC 5 and information related to works, to CPU 110.

Communication interface 124 is for mediating data transmission between CPU 110 and a consol (or a personal computer, a server or the like). Communication interface 124 is typically implemented by Ethernet (registered trademark), USB (Universal Serial Bus) or the like. As will be described later, a program downloaded from a distribution server or the like may be installed in image processing apparatus 100, rather than installing a program stored in memory card 106 in image processing device 100.

Data reader/writer 126 is for mediating data transmission between CPU 110 and memory card 106 as a recording medium. Specifically, memory card 106 is distributed storing a program or the like to be executed by image processing apparatus 100, and data reader/writer 126 reads the program from memory card 106. Further, data reader/writer 126 writes, in response to an internal command of CPU 110, the image data acquired by image pick-up device 8 and/or results of processing by image processing apparatus 100 to memory card 106. Memory card 106 may be implemented by a general semiconductor storage device such as a CF (Compact Flash) or SD (Secure Digital), a magnetic storage medium such as a flexible disk, or an optical storage medium such as a CD-ROM (Compact Disk Read Only Memory).

Further, other output devices such as a printer may be connected to image processing apparatus 100 as needed.

### «C. Overall Process Procedure»

First, an outline of the overall process executed in image processing apparatus 100 in accordance with the present embodiment will be described. It is noted that image processing apparatus 100 in accordance with the present embodiment has the "operation mode" of actually acquiring the input image of each work set 2 and executing the measurement process on the acquired input image, and the "setting mode" of making various settings for realizing operations desired by the user in the "operation mode." The "setting mode" and the "operation mode" can be switched appropriately in accordance with a user operation.

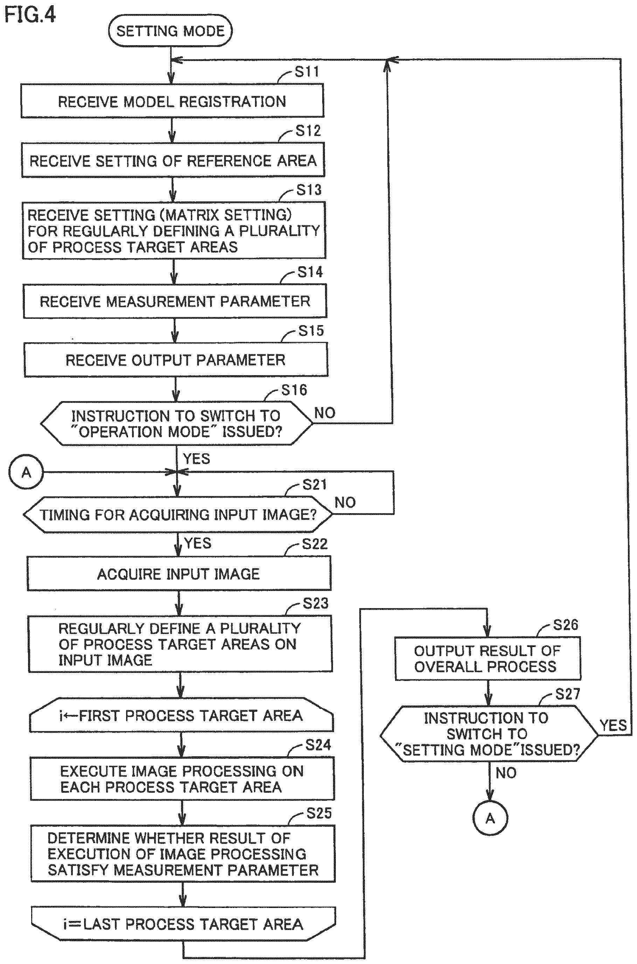

Fig. 4 is a flowchart representing overall process procedure executed by image processing apparatus 100 in accordance with the embodiment of the present invention. Each step shown in Fig. 4 is provided by CPU 110 of image processing apparatus 100 executing a program (instruction codes) prepared in advance. Fig. 4 shows process procedures of both the "setting mode" and the "operation mode," and it is assumed that the initial mode is the "setting mode."

Referring to Fig. 4, CPU 110 receives registration of a model (step S11). The pattern matching process (search process) will be executed using the model set in the model registration process.

As will be described later, the pattern matching process for one input image is executed based on a single model registered in advance, on each of the plurality of process target areas defined on the input image. Specifically, the pattern matching process using the same model is repeated by the number of process target areas defined on the input image. At step S11, CPU 110 receives a setting of common image processing executed on each of the plurality of process target areas.

Thereafter, CPU 110 receives a setting of a reference area for defining the plurality of process target areas on the input image (step S12). Further, CPU 110 receives a setting (matrix setting) for regularly defining the plurality of process target areas on the input image, using the reference area set at step S12 as a reference (step S13). At this time point, using the reference area set at step S12 as a reference, the plurality of process target areas are regularly defined in accordance with the set value or values set at step S13, on the input image.

If a new setting for the reference area is received at step S12 or if a new setting for regularly defining the plurality of process target areas is received at step S13, CPU 110 defines a plurality of process target areas again on the input image. Specifically, if the user changes the setting for the reference area or for regularly defining the plurality of process target areas, CPU 110 also updates the plurality of process target areas that have been defined, in accordance with the change.

Thereafter, CPU 110 receives measurement parameters (step S14). The measurement parameters include conditions for evaluating the result of measurement process executed on each process target area, and conditions for outputting the overall process result reflecting the results of measurement process on respective ones of the plurality of process target areas.

Typically, the former conditions include a threshold value related to the correlation value obtained when the pattern matching process is executed on each process target area. Specifically, if the correlation value obtained as a result of pattern matching process is equal to or higher than a prescribed threshold value, the corresponding process target area is determined to be "OK" and if the correlation value is smaller than the prescribed threshold value, it is determined to be "NG." In this manner, the measurement process (image processing) executed on each process target area includes the process of determining whether or not conditions set in advance as part of the measurement parameters are satisfied.

The latter conditions include setting of a determination condition regarding the number of process target areas having a specific result of determination, among the plurality of process target areas. By way of example, assume that the pattern matching process is done on each of the plurality of process target areas defined for one input image. If the number of process target areas that are determined to be "OK" is equal to or higher than a prescribed threshold value, the input image as a whole is determined to be "OK", and if the number of process target areas determined to be "OK" is smaller than the threshold value, the input image as a whole is determined to be "NG." In this manner, conditions for evaluating the input image as a whole based on the results of determination on respective ones of the plurality of process target areas as the result of overall process are set.

Further, CPU 110 receives output parameters (step S15). The output parameters include conditions for outputting the results of measurement process (image processing) executed in the operation mode.

Then, CPU 110 determines whether or not switching to the "operation mode" is instructed (step S16). If instruction to switch to the "operation mode" is not issued (NO at step S16), the process after step S11 is repeated. On the contrary, if the instruction to switch to the "operation mode" is issued (YES at step S16), the process from step S21 is executed.

Though the process of steps S11 to S15 in the flowchart of Fig. 4 are described in series for convenience of description, these process steps may be executed in parallel, or the order of execution may be changed appropriately.

When switched to the "operation mode," CPU 110 waits for the timing of acquiring the input image (step S21). Specifically, if it is detected that work set 2 has entered the range of field of view of image pick-up device 8 by the sensor output of photo-electric sensor 4 (light receiving unit 4a and light emitting unit 4b) and PLC 5 notifies the detection, CPU 110 determines that it is the timing for acquiring the input image.

If it is determined to be the timing of acquiring the input image data (YES at step S21), CPU 110 acquires the input image (step S22). More specifically, CPU 110 issues an image pick-up instruction to image pick-up device 8, whereby image pick-up device 8 executes the image pick-up process. If it is the case that image pick-up device 8 repeats image pick-up continuously (at a prescribed frame period), the image data output from image pick-up device 8 at that timing is saved as the input image. If it is not determined to be the timing of acquiring the input image data (NO at step S21), the process of step S21 is repeated.

Thereafter, CPU 110 regularly defines the plurality of process target areas for the input image data acquired at step S22 (step S23). At this time, CPU 110 divides the image data representing the input image corresponding to respective process target areas. A subset of image data corresponding to each process target area obtained by the division will be the object of the pattern matching process.

Here, CPU 110 defines the plurality of process target areas on the input image such that in the reference area set in association with the input image, neighboring process target areas satisfy the setting (matrix setting) for regularly defining the plurality of process target areas set at step S13.

Thereafter, CPU 110 executes the image processing (pattern matching process) on each of the plurality of process target areas in accordance with the setting (pre-registered model) related to the common image processing set at step S11 (step S24). Then, CPU 110 determines whether or not the result of execution of the image processing at step S24 satisfies the conditions (measurement parameters) set in advance at step S14 (step S25).

CPU 110 repeats the process of steps S24 and S25 by the number of process target areas defined for the input image.

Thereafter, CPU 110 outputs the result of overall process reflecting the results of image processing operations on respective ones of the plurality of process target areas (step S26). Here, CPU 110 outputs the result of determination as to whether the results of determination on respective ones of the plurality of process target areas satisfy the conditions for determination (measurement parameters) set in advance at step S14, as the result of overall process. Then, the process in this instance ends.

Thereafter, CPU 110 determines whether or not an instruction to switch to the "setting mode" is issued (step S27). If the instruction to switch to the "setting mode" is not issued (NO at step S27), the process following step S21 is repeated. If the instruction to switch to the "setting mode" is issued (YES at step S27), the process following step S11 is executed.

If an instruction to end the process is given by the user, execution of the flowchart shown in Fig. 4 is stopped/terminated.

### <<D. User Interface>>

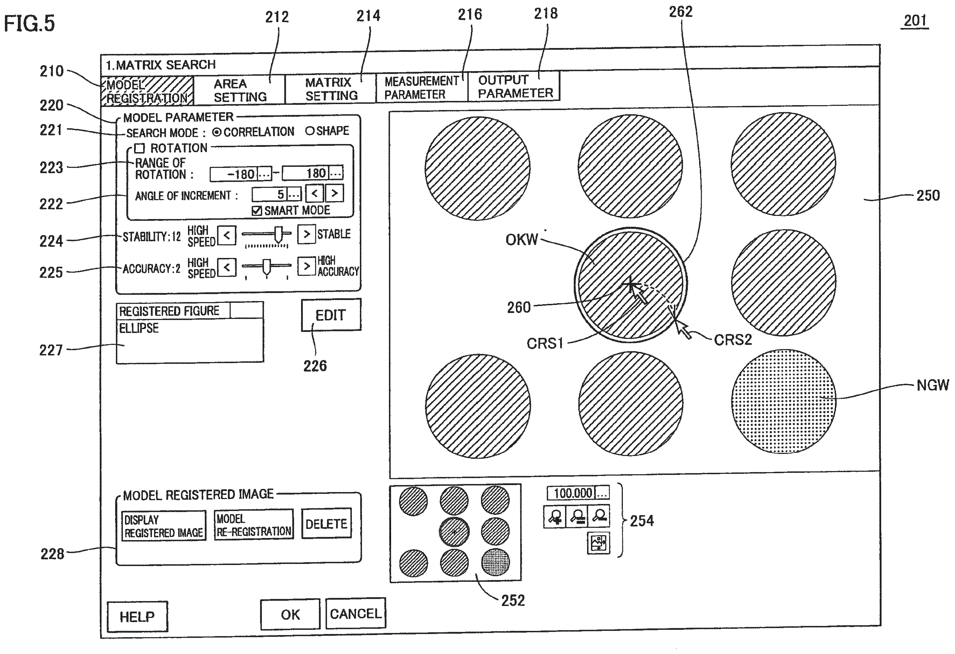

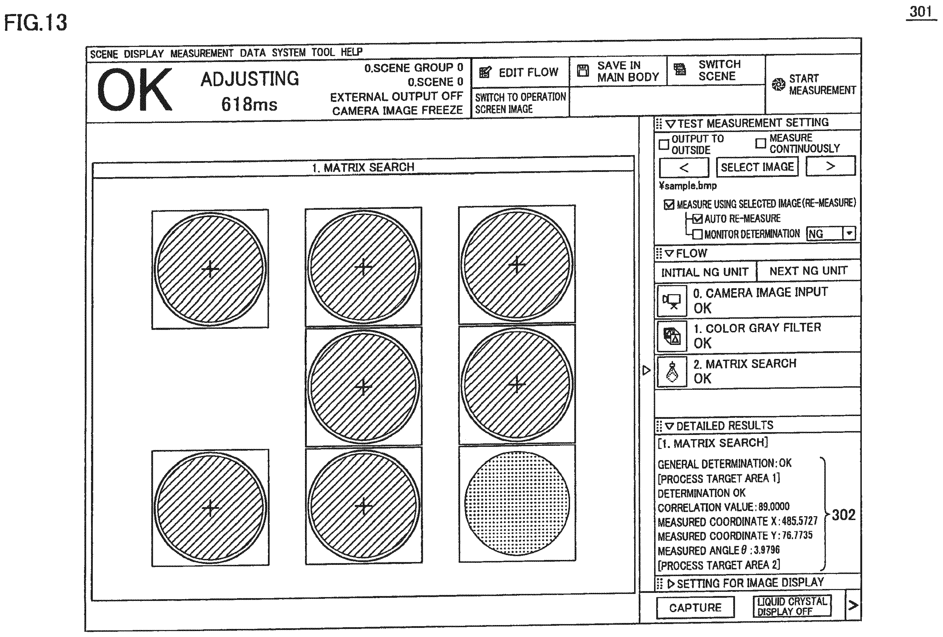

Examples of user interface screen images provided by image processing apparatus 100 in accordance with the present embodiment are shown in Figs. 5 to 11 and Fig. 13. The user interface screen images shown in Figs. 5 to 11 are provided in the setting mode, and the user interface screen image shown in Fig. 13 is provided in the operation mode.

The user interface screen images shown in Figs. 5 to 11 show the input image acquired by image pick-up device 8, and allow setting of various parameters necessary for the measurement process in accordance with the present embodiment. The user interface screen images shown in Figs. 5 to 11 can be switched to/from each other by selecting tabs. Further, the user interface screen image shown in Fig. 13 shows the input image acquired by image pick-up device 8 and displays the result of measurement executed on the input image.

In the following, details of the processes/operations at main steps shown in Fig. 4 will be described with reference to these user interface screen images.

### «E. Model Registration Process»

First, the model registration process shown at step S11 of Fig. 4 will be described.

Fig. 5 shows an example of a user interface screen image 201 related to the model registration process provided by image processing apparatus 100 in accordance with the embodiment of the present invention. User interface screen image 201 receives settings for common image processing executed on each of the plurality of process target areas.

More specifically, on user interface screen image 201, a model registration tab 210, an area setting tab 212, a matrix setting tab 214, a measurement parameter tab 216, and an output parameter tab 218 are displayed in a selectable manner. User interface screen image 201 shown in Fig. 5 is provided when model registration tab 210 is selected.

User interface screen image 201 includes a model parameter setting area 220, a model registration image area 228, an image display area 250, a full display area 252, and a group of display control icons 254.

On image display area 250, the input image generated by image-pick-up by image pick-up device 8 is displayed. In the model registration process, a work set as a reference (reference model) is set in the field of view of image pick-up device 8. The input image acquired by image pick-up of the work set is displayed on image display area 250, and when the user sets a range to be registered as a model by, for example, operating a mouse, the image encompassed by the range is registered as a model.

In the examples of user interface screen images shown in Figs. 5 to 11, process target areas of 3 rows × 3 columns (9 portions) are set. In this example, of these process target areas, works OKW as the targets of detection are arranged on seven portions, a work NGW as a target not be detected is arranged at a portion, and no work is arranged on the remaining one portion. Therefore, essentially, it is necessary that the seven works OKW are determined to be "OK," and that the remaining process target areas are determined to be "NG" or the measurement process is skipped.

First, Fig. 5 shows an example in which a circular range (including both regular circle and ellipse) is registered as a model. Here, the user moves a cursor to the center of the portion to be registered as a model (cursor position CRS1) and, thereafter, drags to an outer circumferential position of the model (cursor position CRS2), whereby a model area 262 is set, and the image inside model area 262 is registered as a model. The central position 260 of the model area 262 is also displayed.

The shape to be registered as the model may be arbitrarily set by the user. Specifically, when the user selects edition button 262, a pop-up image (not shown) is displayed, allowing selection of the model shape, and the user can select a rectangle, a polygon or the like using the pop-up image. It is also possible to register a plurality of models for one input image. Registered models are displayed as a list by texts representing the shapes, on registered image area 272. In the example shown in Fig. 5, a circular model is registered, and the registration is displayed by the text "ellipse."

If the user selects any of the buttons of the group of display control icons 254, display range/display magnification or the like of the image displayed in image display area 250 changes, in accordance with the selected button. Further, on the full display area 252, the image that can be displayed in image display area 250 is displayed in full.

In this manner, the image to be used as a model is set. User interface screen image 201 also allows input of setting related to the pattern matching using the model.

More specifically, a model parameter setting area 220 for inputting settings related to the pattern matching process is displayed. In the model parameter setting area 220, settings (search mode, stability, accuracy and the like) related to the pattern matching process are received.

Regarding the setting related to the search mode, by selecting a radio button 221, either the "correlation search" or the "shape search" can be set. In the "correlation search," the search process (pattern matching process) is executed based on a correlation value between the model and the image in the process target area. In contrast, in the "shape search," the search process (pattern matching process) is executed based on the value (for example, edge code representing the vector quantity of the edge) representing the shape of the model and the image in the process target area.

Further, the pattern matching process may be executed using not only the registered model but also the model being rotated. This is made possible considering a possibility that an image of work set 2 is picked-up by image pick-up device 8 with the work set rotated from the originally intended position.

More specifically, when a rotation check box 223 is activated, the detailed search process described above, an angle search process and the like are activated. When rotation check box 223 is inactivated, the pattern matching process with the model rotated does not take place.

If the rotation check box 223 is activated, the search process is executed with the model rotated in the range of rotation set by the user in a numerical value input box in rotation parameter setting area 222. The angular interval (angle of increment) for rotating the model is also set. By appropriately setting the range of rotation and the angel of increment in accordance with the set model and the object process target area, speed of processing can be improved while maintaining search accuracy.

Further, by operating slides 224 and 225, the user can set the stability and accuracy related to the search process, respectively. By increasing the value of stability, possibility of erroneous detection can be reduced, whereas the time necessary for the search process becomes relatively longer. By increasing the value of accuracy, the accuracy of detected coordinate position can be improved, whereas the time necessary for the search process becomes relatively longer. Therefore, the user sets these parameters considering, for example, the inspection time allowable for each work set.

It is also possible to edit the registered model. More specifically, on model registration image area 228, a "registered image display" button for displaying the registered model, a "model re-registration button" for registering again the already registered model, and a "delete" button for deleting the registered model are displayed in a selectable manner.

By the above-described procedure, the model and parameters necessary for the pattern matching process using the model can be set.

### «F. Area Setting Process»

Next, the area setting process shown at step S12 of Fig. 4 will be described.

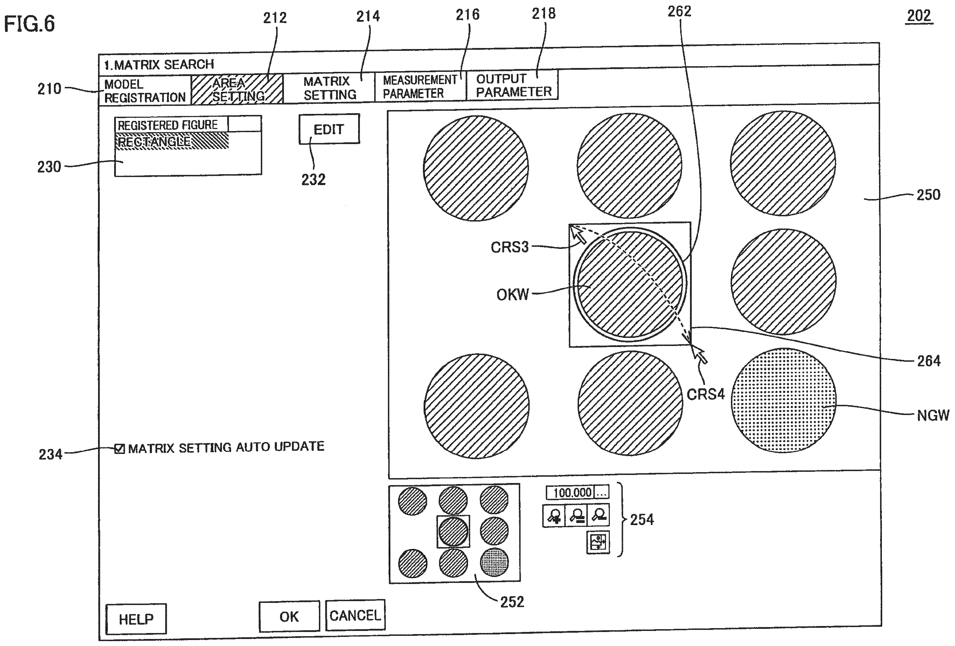

Fig. 6 shows an example of a user interface screen image 202 related to the area setting process provided by image processing apparatus 100 in accordance with the embodiment of the present invention. User interface screen image 202 receives a setting of a reference area for defining a plurality of process target areas on the input image. User interface screen image 202 shown in Fig. 6 is provided when an area setting tab 212 is selected.

More specifically, on user interface screen image 202, first, size of one process target area is set. Specifically, model area 262 that has been set in the model registration process shown in Fig. 5 is displayed overlapped on the input image, and the user sets a unit area 264 representing one process target area by operating, for example, mouse 104.

User interface screen image 202 of Fig. 6 shows, as an example, a state in which the user sets a rectangular unit area 264. In this example, the user moves the cursor to an upper left position of a range to be the unit area (cursor position CRS3), and thereafter, drags it to a lower right position of the range to be the unit area 264 (cursor position CRS4) and, thus, unit area 264 is set.

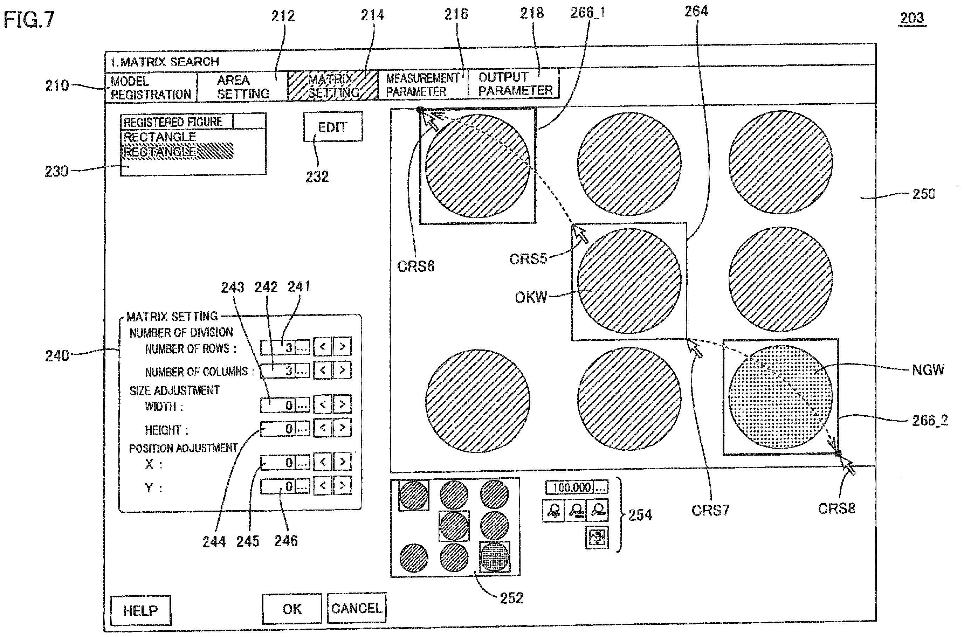

In image processing apparatus 100 in accordance with the present embodiment, using unit area 264, the reference area for defining the plurality of process target areas on the input image is set. The process for setting the reference area will be described with reference to Fig. 7.

The shape of unit area 264 can be set at will by the user. Specifically, when the user selects edition button 232, a pop-up image (not shown) is displayed, allowing selection of the shape of unit area 264, and the user can select a rectangle, a polygon or the like using the pop-up image. Set unit areas 264 are displayed as a list by texts representing the shapes, on registered image area 230. In the example shown in Fig. 6, a rectangular model is registered, and the registration is displayed by the text "rectangle."

On user interface screen image 202 shown in Fig. 6, a check box 234 of "automatically update matrix setting" is displayed. When the user checks and activates this check box 234, if a plurality of process target areas are defined in accordance with the setting of unit area 264 and thereafter the size or the like of unit area 264 should be changed, a plurality of process target areas are defined again, in accordance with the changed size or the like of the unit area 264. Namely, check box 234 is for activating/inactivating the process of linking the setting of unit area 264 and the setting of the plurality of process target areas on the input image.

### <<G. Matrix Setting Process>>

Next, the matrix setting process shown at step S13 of Fig. 4 will be described.

Figs. 7 to 9 show examples of user interface screen image 203 related to the matrix setting process provided by image processing apparatus 100 in accordance with the present embodiment. User interface screen image 203 receives a setting of the reference area for defining the plurality of process target areas on the input image. User interface screen image 203 shown in Fig. 7 is provided when a matrix setting tab 214 is selected.

More specifically, on user interface screen image 203, first, the reference area is set using unit area 264 representing one process target area set on user interface screen image 202 shown in Fig. 6. Specifically, on user interface screen image 203, unit area 264 set by the area setting process shown in Fig. 6 is displayed overlapped on the input image, and the user places unit area 264 on two or more positions of the input image by, for example, operating mouse 104. Based on the plurality of unit areas 264 arranged on the input image, the reference area is set.

In image processing apparatus 100 in accordance with the present embodiment, by way of example, a scope inscribed in two unit areas (copies) 266 arranged as a result of movement of unit area 264 on the user interface screen image is set as the reference area.

For instance, assume that the user moves unit area 264 to the upper left to place a unit area (copy) 266_1 (moves from cursor position CRS5 to cursor position CRS6), and then moves unit area 264 to lower right to place a unit area (copy) 266_2 (moves from cursor position CRS7 to cursor position CRS8). Here, a rectangular range having the coordinate point at the upper left corner of unit area (copy) 266_1 and the coordinate point at the lower right corner of unit area (copy) 266_2 as vertexes is set as the reference area.

Specifically, the user moves unit area 264 to match the work at the start position (upper left portion) of work set 2 appearing in the input image and then moves it to match the work at the last position (lower right portion). Regarding selection of matrix setting tab 214 and display of user interface screen image 203 of Fig. 7 in response as an event, unit areas (copies) 266_1 and 266_2 may be formed based on the setting of unit area 264 and these areas may be displayed in a selectable manner at default positions.

As will be described later, the user may set any shape as the reference area.

In this manner, user interface screen image 203 receives a setting of the reference area for defining the plurality of process target areas on the input image.

It is noted that the shape of unit areas (copies) 266_1 and 266_2 can also be arbitrarily changed by the user. Specifically, when the user selects edit button 232, a pop-up image (not shown) allowing selection of the shape of unit area 264 appears, and on the pup-up image, the size or shape may be changed. Unit areas (copies) set on the input image are displayed as a list by texts representing the shapes, on registered image area 230. In the example shown in Fig. 7, two unit areas (copies) are registered, and the registration is displayed by two text indications of "rectangle."

Thereafter, user interface screen image 203 receives a setting for regularly defining the plurality of process target areas. In image processing apparatus 100 in accordance with the present embodiment, a plurality of process target areas are defined as rows and columns (matrix), with respect to the rectangular reference area. Therefore, user interface screen image 203 receives parameters necessary for arranging the process target areas in rows and columns.

More specifically, user interface screen image 203 includes a matrix setting area 240. Matrix setting area 240 includes numerical value input boxes 241 and 242 for setting the number of process target areas in the row direction (number of rows) and the number in the column direction (number of columns) to be arranged in the reference area. The user inputs desired numbers in numerical value input boxes 241 and 242, whereby the plurality of process target areas are set for the reference area. The examples of Figs. 7 to 9 show a setting in which process target areas in 3 rows × 3 columns are defined.

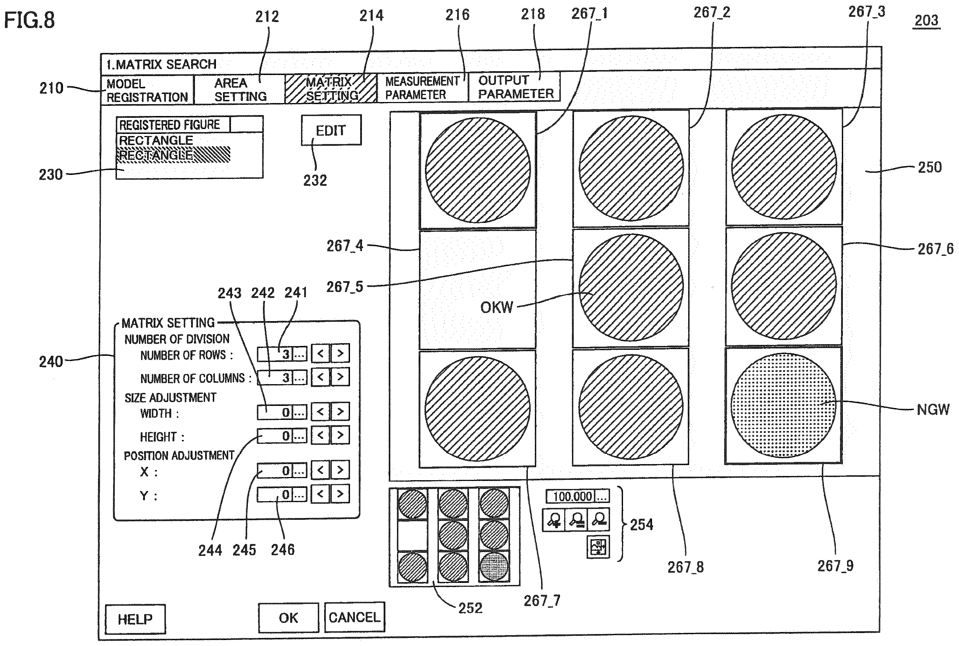

After unit area 264 and the reference area are set and the number of process target areas in the row direction (number of rows) and the number in the column direction (number of columns) to be arranged in the reference area are set in the above-described manner and then "OK" button is pressed, image processing apparatus 100 defines the plurality of process target areas on the input image such that neighboring process target areas satisfy the settings received at numerical value input boxes 241 and 242 of matrix setting area 240. Specifically, user interface screen image 203 such as shown in Fig. 8 is displayed.

Referring to Fig. 8, on user interface screen image 203, a plurality of process target areas 267_1 to 267_9 (these will be also generally referred to as "process target area 267") are arranged in rows and columns on the input image. Here, the size of each of process target areas 267_1 to 267_9 is the same as that of unit area 264 set as shown in Fig. 6.

As compared with the range occupied by the plurality of process target areas (unit area 264), if the area of reference area is larger, the plurality of process target areas can be arranged in rows and columns without any overlap with each other. In this state, it seems as if the reference area is divided (see Fig. 8). Therefore, the name "division number" is used in user interface screen image 203 shown in Figs. 7 to 9. It is noted, however, that in image processing apparatus 100 in accordance with the present embodiment, the plurality of process target areas may be arranged overlapped with each other. Even in that case, when the common portion (for example, central point) of each process target area is viewed, it is understood that the plurality of process target areas are arranged in rows and columns.

Matrix setting area 240 further includes numerical value input boxes 243 and 244 for adjusting the size of reference area, and numerical value input boxes 245 and 246 for adjusting the general position of the plurality of process target areas set using the reference area as a reference.

When the user inputs desired numbers in numerical value input boxes 243 and 244, respectively, the size of reference area is changed. Specifically, to numerical value input box 243, an amount of change of the width of reference area is input, and to numerical value input box 244, an amount of change of the height of reference area is input. It is preferred that the numerical values input to numerical value input boxes 243 and 244 are relative values (with respect to the currently set reference area). As the size of reference area is changed in this manner, the manner of arrangement of process target areas 267_1 to 267_9 (that is, the space between neighboring process target areas 267 and positions of process target areas 267) is updated.

Further, when the user inputs desired numbers in numerical value input boxes 245 and 246, respectively, the position of arrangement of reference area is changed. Specifically, to numerical value input box 245, an amount of movement in the X direction (left/right direction of the figure) of the reference area is input, and to numerical value input box 246, an amount of movement in the Y direction (up/down direction of the figure) of the reference area is input. It is preferred that the numerical values input to numerical value input boxes 245 and 246 are relative values (with respect to the currently set reference area). As the position of arrangement of reference area is changed in this manner, the general positional relation of process target areas 267_1 to 267_9 is updated.

As can be naturally understood, if the values of the number of rows or columns of process target areas is updated, that is, if a new value is input to numerical value input box 241 or 242, the number or position of process target areas defined on the input image is updated.

In this manner, in image processing apparatus 100 in accordance with the present embodiment, when new setting for the reference area is received, or if a new setting for regularly defining the plurality of process target areas is received, the plurality of process target areas are re-defined on the input image.

As described above, in the matrix setting process shown at step S13 of Fig. 4, the user sets the start position and end position of the reference area and thereafter sets the number of division in the row direction (up/down direction in the figure) and the column direction (right/left direction in the figure), whereby the plurality of process target areas are regularly defined. The user may additionally adjust the size (width and height) of the reference area and position (X and Y directions) of the reference area.

Since the user can set the reference area while viewing the input image in the above-described manner, the process target areas can be arranged regularly with ease. Specifically, by only setting the process target areas positioned at the upper left and lower right (or upper right and lower left) portions among the plurality of process target areas to be set on the input image, remaining process target areas can be set automatically. Therefore, the process target areas can be set in a very simple manner in a short time.

It may be possible that in target work set 2, part of main regularity is lacking. By way of example, as shown in Fig. 8, no work as the target of detection exists on the second row of the leftmost column. To be able to handle such work set 2 that partially lacks the regularity, image processing apparatus 100 in accordance with the present embodiment allows setting of activation and inactivation as the target of executing the measurement process (image processing), for each of the defined plurality of process target areas.

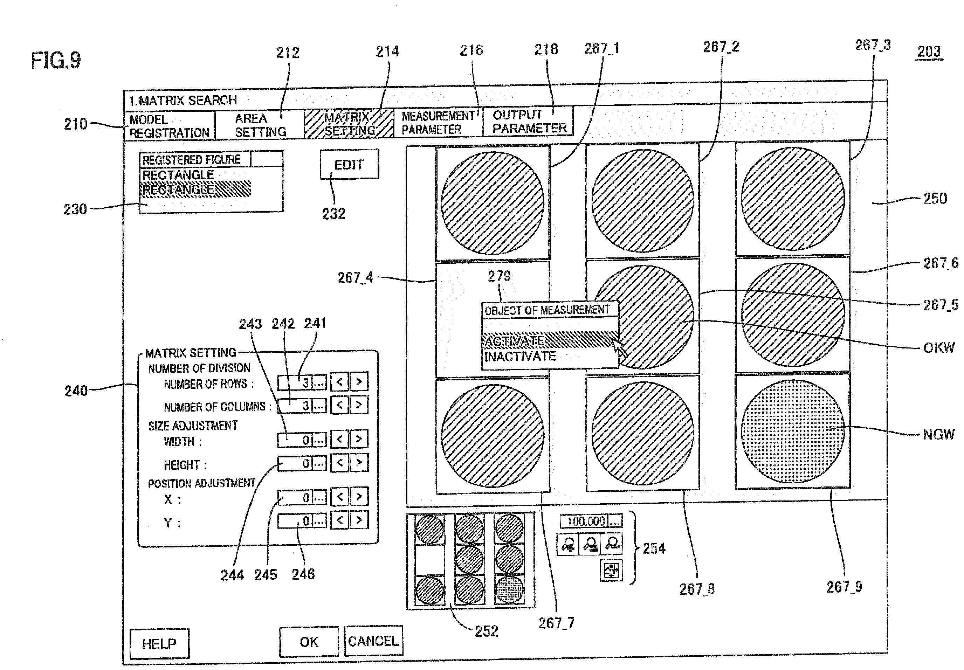

Specifically, when the user clicks any of the plurality of process target areas 267_1 to 267_9 defined on the input image with, for example, a mouse, a pull-down menu 279 such as shown in Fig. 9 is displayed. Pull down menu 279 allows selection of "activation" and "inactivation." If "activation" is selected, the corresponding process target area 267 becomes the object of measurement process (image processing). On the other hand, if "inactivation" is selected, the measurement process (image processing) of the corresponding process target area 267 is skipped.

In this manner, user interface screen image 203 specifies the selected process target area among the plurality of process target areas in response to an input from an input device such as a mouse (or a touch-panel) in connection with the display position on display 102, and determines whether or not the process target area is to be activated or inactivated as the target of executing the measurement process (image processing).

The manner of display may be made different depending on the activated/inactivated state, so that whether each process target area is activated or inactivated can be recognized at a glance. By way of example, the process target area that is inactivated may be displayed in gray (gray-out).

### «H. Measurement Parameter Setting Process»

Next, the measurement parameter setting process shown at step S14 of Fig. 4 will be described.

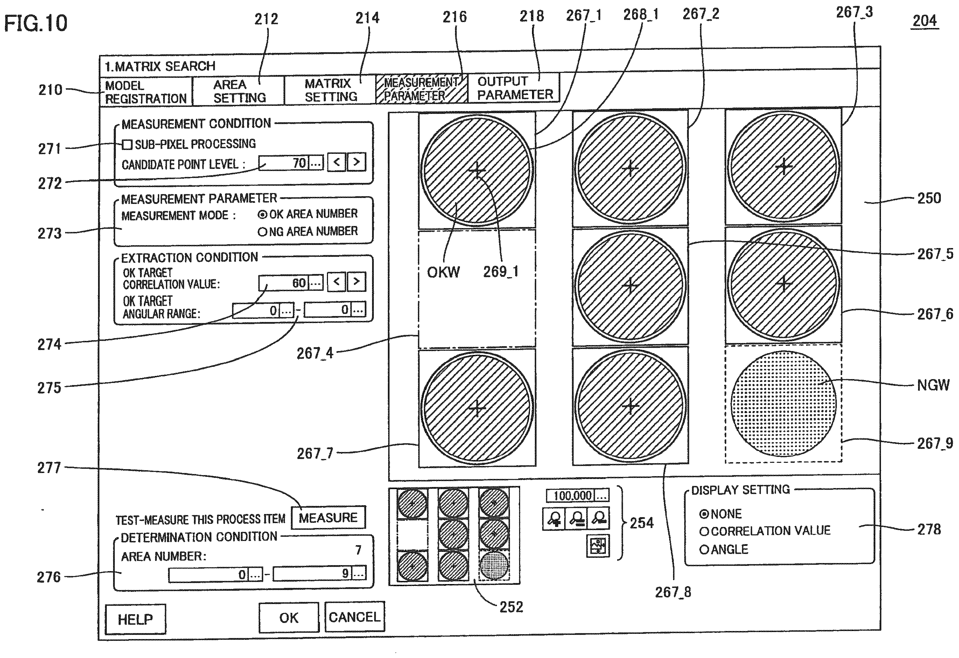

Fig. 10 shows an example of a user interface screen image 204 related to the measurement parameter setting process provided by image processing apparatus 100 in accordance with the embodiment of the present invention. User interface screen image 204 receives conditions for evaluating the result of measurement process (image processing) executed on each process target area 267, and conditions for generating overall process result reflecting the results of evaluation of image processing on respective ones of the plurality of process target areas, respectively. User interface screen image 204 shown in Fig. 10 is provided when measurement parameter tab 216 is selected.

First, user interface screen image 204 includes a measurement conditions area and an extraction conditions area. These areas receive conditions for evaluating the results of measurement process (image processing) executed on each of the process target areas 267.

Specifically, in the measurement conditions area, a sub-pixel process check box 271 for setting whether or not the pattern matching process is to be executed on the basis of sub-pixel unit, and a numerical value input box 272 for setting the value of a candidate point level when the sub-pixel process is to be executed, are displayed. When the sub-pixel process check box 271 is activated, the sub-pixel process is executed on a candidate point (pixel unit) having high degree of matching with a pre-registered model. As the condition (threshold value) for extracting a candidate point to execute the sub-pixel process, the value (relative value) input to numerical value input box 272 is used.

Further, the extraction conditions area receives a condition (threshold value) for determining which of the areas that match the pre-registered model is "OK". More specifically, in the extraction conditions area, a numerical value input box 274 for setting a threshold value for the correlation value to determine the "OK" target, and a numerical value input box 275 for setting a threshold range of angle of rotation for determining the "OK" target are displayed.

In the pattern matching process, the correlation value is calculated as a value representing degree of matching with a pre-registered model, and the model image is rotated in a prescribed range to attain the highest degree of matching. The results of pattern matching process include the correlation value and the angle of rotation. Therefore, if the correlation value obtained as a result of pattern matching process is equal to or higher than the value set in numerical value input box 274 and the angel of rotation obtained as a result of pattern matching process is within the range set in numerical value setting box 275, the corresponding process target area is determined to be "OK."

Further, user interface screen image 204 includes a measurement parameter area and a determination condition area. These areas receive conditions for generating the overall process result reflecting the results of evaluation of image processing operations on respective ones of the plurality of process target areas.

In measurement parameter area, radio buttons 273 for setting whether the number of process target areas determined to be "OK" or the number of process target areas determined to be "NG" is to be used for generating the overall process result is displayed.

If the radio button corresponding to the number of "OK" areas is selected, "OK area number" is selected as the measurement mode. In this measurement mode, of the results of measurement processes executed on respective ones of the plurality of process target areas, if the number of results determined to be "OK" satisfies the determination condition as will be described later, the overall result of processing is determined to be "OK." Namely, the result that the target work set 2 is OK is output. The "OK area number" measurement mode is suitable for a process in which whether or not a prescribed number of works is included in the work set 2 is checked.

On the contrary, if the radio button corresponding to the number of "NG" areas is selected, "NG area number" is selected as the measurement mode. In this measurement mode, of the results of measurement processes executed on respective ones of the plurality of process target areas, if the number of results determined to be "NG" satisfies the determination condition as will be described later, the overall result of processing is determined to be "OK." This "NG area number" measurement mode is suitable for a process in which whether or not the number of defective items included in work set 2 is equal to or smaller than a prescribed value is checked.

The determination condition area receives a setting of determining conditions regarding the number of process target areas satisfying pre-set conditions, among the plurality of process target areas. More specifically, in determination condition area, a numerical value input box 276 for setting determination condition regarding the number of process targets corresponding to the specific result of determination (that is, "OK" or "NG") designated in accordance with the measurement mode set by radio button 273 is displayed.

In the example shown in Fig. 10, the lower limit of the number of areas is "0" and the upper limit is "9", and "OK area number" is selected as the measurement mode. Therefore, as a result of measurement process on the input image (work set 2), if the number of process target areas determined to be "OK" is in the range of 0 to 9, the overall process result of "OK" is output. Otherwise, the overall process result of "NG" is output.

Further, user interface screen image 204 has a measurement button 277, for preliminarily executing the measurement process. When the measurement button 277 is pressed, a plurality of process target areas are set on the input image that is currently input, and the pattern matching process is executed on each of the process target areas, as in the "operation mode."

Fig. 10 shows an example of a state when the measurement process is executed preliminarily. Specifically, of the process target areas 267_1 to 267_9, in process target areas where pattern matching process was successful, a cross mark (+) representing respective coordinate positions 269_1, 269_2, 269_3, 269_5, 269_6, 269_7 and 269_8 are displayed. In addition to the cross mark, area marks 268_1, 268_2, 268_3, 268_5, 268_6, 268_7 and 268_8 indicating the outer shape of the area that matches the model image obtained as a result of pattern matching process are displayed.

Since there is no work in process target area 267_4, the cross mark and the area mark are not displayed. Further, since a work NGW not to be detected is arranged on process target area 267_9, the cross mark and the area mark are not displayed, either.

Further, user interface screen image 204 includes a display setting area 278. On display setting area 278, radio buttons for selecting pieces of information to be displayed over the input image are displayed. Specifically, if a radio button of "correlation value" is selected, the correlation value calculated by the execution of pattern matching process is displayed in association with the corresponding process target area, and if a radio button of "angle" is selected, the angle calculated by the execution of pattern matching process is displayed in association with the corresponding process target area.

In the user interface screen image 204 shown in Fig. 10, by making different the manner of display on the input image, the result of determination in each of the plurality of process target areas is indicated. By way of example, the process target area determined to be "OK" (in the example of Fig. 10, process target areas 267_1, 267_2, 267_3, 267_5, 267_6, 267_7 and 267_8) as a result of pattern matching process on each process target area, has the outer frame displayed in "green," and the process target area determined to be "NG" (in the example of Fig. 10, process target area 267_9) has the outer frame displayed in "red." The process target area that is not the target of measurement process (process target area 267_4) has the outer frame displayed in "gray."

In this manner, in user interface screen image 204, as the overall process result, whether or not the results of determination of respective ones of the plurality of process target areas satisfy the determination condition is output. In other words, the overall process result reflecting the results of image processing of respective ones of the plurality of process target areas is output. Further, by making different the manner of display on the input image, the result of determination on each of the plurality of process target areas is output.

### <<I. Output Parameter Setting Process>>

Next, the output parameter setting process shown at step S15 of Fig. 4 will be described.

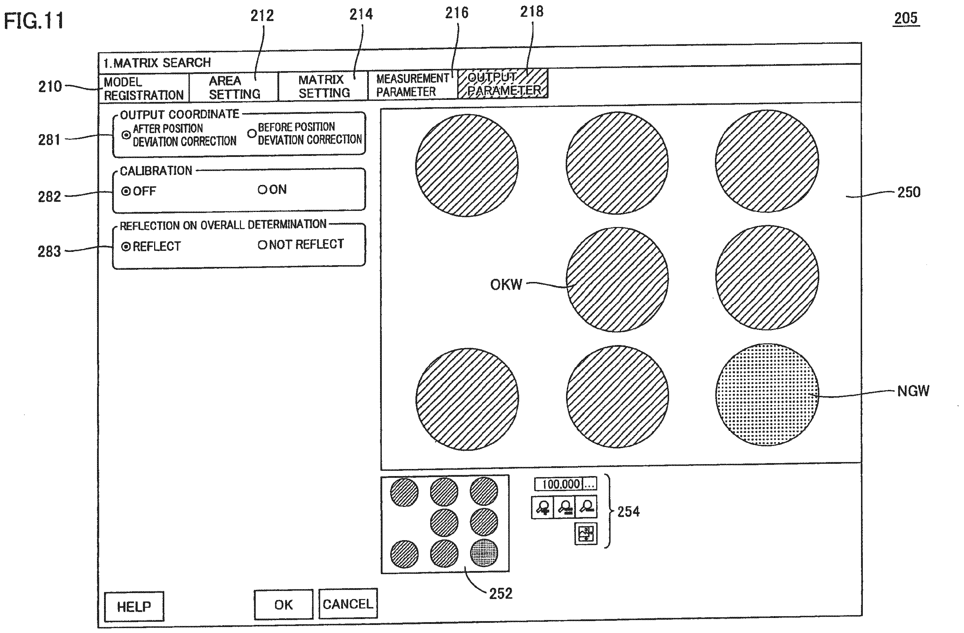

Fig. 11 shows an example of a user interface screen image 205 related to the output parameter setting process provided by image processing apparatus 100 in accordance with the embodiment of the present invention. User interface screen image 205 receives a setting related to the method of outputting the results of measurement process executed on the plurality of process target areas defined on the input image. User interface screen image 205 shown in Fig. 11 is provided when output parameter tab 218 is selected.

User interface screen image 205 includes an output coordinate area 281, a calibration area 282, and an overall determination reflecting area 283.

On output coordinate area 281, radio buttons for setting whether the value before position deviation correction or the value after position deviation correction is to be output as the measurement are displayed. The position deviation correction includes a pre-processing of input image acquired by the image pick-up by image pick-up device 8. Specifically, in order to correct optical characteristics of image pick-up device 8, pre-processing such as enlargement/reduction/rotation may be executed on the input image in advance. Whether the result of pattern matching process is to be output using the value of coordinate system before the pre-processing or using the value of coordinate system after the pre-processing is selected.

On calibration area 282, radio buttons for setting whether a value before calibration process or a value after calibration process is to be output as the measurement coordinate are displayed. The calibration process is for correcting error derived from the environment where image pick-up device 8 is installed, using the input image acquired by picking-up a reference in advance as a reference. In calibration area 282, whether the coordinate values before applying the calibration process or the coordinate values after applying the calibration process are to be output is selected.

In overall determination reflecting area 283, radio buttons for setting whether or not the result of determination for each process target area is to be included in the overall result of determination are displayed.

### «J. Operation Mode»

Next, the process in the "Operation Mode" of steps S21 to S26 of Fig. 4 will be described.

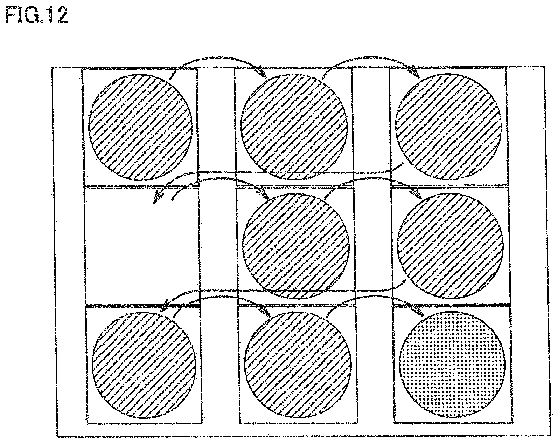

Fig. 12 is a schematic illustration representing the process executed in the "operation mode" of image processing apparatus 100 in accordance with the embodiment of the present invention.

Referring to Fig. 12, in the "operation mode," the pattern matching process is executed on each of the plurality of process target areas in accordance with the following procedure.
(1) For the reference area (the range from the start position of the unit area (copy) arranged at the upper left corner to the end position of the unit area (copy) arranged at the lower right corner) set on the input image, a plurality of process target areas are set in accordance with a designated rule.
(2) On the process target area at the initial position, the pattern matching process with a pre-registered model is executed.
(3) Whether the correlation value and the angle obtained as a result of the pattern matching process satisfy pre-set conditions, respectively, is determined and thereby whether or not the process target area is "OK" or "NG" is determined.
(4) The processes (2) and (3) are executed on every process target area.
(5) In accordance with the set measurement mode, based on the number of process target areas that are determined to be "OK" or the number of process target areas that are determined to be "NG," the result of overall process is output. Specifically, if the measurement mode is "OK area number," the number of process target areas that are determined to be "OK" is calculated, and if the calculated number is within the range set as the determination condition, "OK" is output as the result of overall process, and otherwise, "NG" is output. On the other hand, if the measurement mode is "NG area number," the number of process target areas that are determined to be "NG" is calculated, and if the calculated number is within the range set as the determination condition, "OK" is output as the result of overall process, and otherwise, "NG" is output.

Fig. 13 shows an example of a user interface screen image 301 provided in the "operation mode" by image processing apparatus 100 in accordance with the embodiment of the present invention.

Referring to Fig. 13, user interface screen image 301 shows the result of measurement obtained by the measurement process as described above, on the input image generated when a work set including a plurality of works exists in the field of view of image pick-up device 8.

User interface screen image 301 shown in Fig. 13 notifies the user of the result ("OK" or "NG") of pattern matching process on each process target area by making different the corresponding manner of display (making different the color of outer frame defining each process target area). At the same time, on user interface screen image 301, characters "OK" or "NG" are displayed, indicating the result of overall process.

In this manner, on user interface screen image 310, the result of pattern matching process executed on each process target area as well as the result of overall process generally representing the results of pattern matching process on respective ones of the process target areas are displayed on the same screen image.

Further, pieces of information including the correlation value, position and angle obtained by each measurement process are also displayed (reference character 302).

### «K. Functions/Effects»

In the image processing apparatus in accordance with the present embodiment, even if there are a number of works as the object of measurement process, setting of conditions necessary for the measurement process is required only once. Particularly, the setting for defining the plurality of process target areas only requires designation of a reference area (whole range) and the rule for setting the process target areas (method of division). Therefore, the setting process required before starting the measurement process can be simplified.

Further, in the image processing apparatus in accordance with the present embodiment, the process target areas are set manually on the input image. Therefore, as compared with the process in which the reference area is automatically divided, the process necessary for automation can be omitted and hence the process time can be reduced, and waste of time caused by erroneous setting of process target area can be avoided.

Further, in the image processing apparatus in accordance with the present embodiment, the same pattern matching process (search process, labeling process or the like) is executed in parallel on every process target area and the results of processing are evaluated generally. Therefore, a work set including a plurality of works can be inspected reliably.

### «L. Modification»

### (l1: First Modification)

In the embodiment above, the reference area is automatically set by defining two unit areas (copies) 266 on the user interface screen image as shown in 1 this regard, if a work as an object of detection does not exist at a corner (end) of work set 2, it may be more user-friendly if the user sets the reference area to have any shape. In the present modification, an example of user interface that allows the user to set any shape as the reference area will be described.

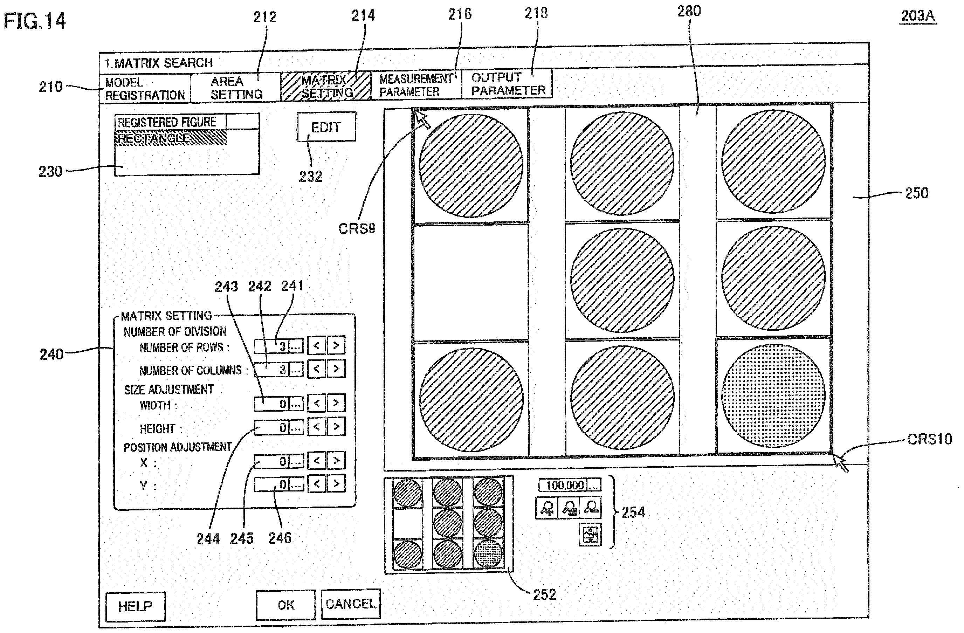

Fig. 14 shows an example of a user interface screen image 203A related to setting of process target areas provided by the image processing apparatus in accordance with a first modification of the embodiment of the present invention. In user interface screen image 203A shown in Fig. 14, on the input image displayed on image display area 250, the user can set any shape as reference area 280 by operating, for example, a mouse.

By way of example, when the user drags from cursor position CRS9 to cursor position CRS10 as shown in Fig. 14, a rectangular reference are 280 is set. Once the reference area 280 is set, the plurality of process target areas can be regularly defined through the same process as described above.

Except for this point, the process is the same as that of the embodiment described above. Therefore, detailed description thereof will not be repeated.

### (l2: Second Modification)

In the embodiment and the first modification described above, an example in which the plurality of process target areas is arranged in rows and columns has been described as an example of regularly defining the plurality of process target areas. In the second modification, an example in which the plurality of process target areas is defined in a zigzag alignment will be described.

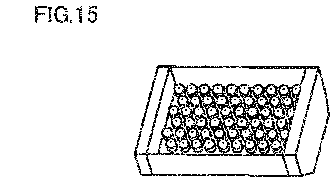

Fig. 15 is a schematic illustration showing an example of works as the target of image processing apparatus in accordance with a second modification of the embodiment of the present invention. Fig. 15 shows an example of a lighting system having a plurality of LEDs in each row. In such a lighting system, in order to increase density of mounted LEDs, the positions of mounting LEDs are shifted slightly between neighboring rows. In a typically adopted arrangement, the positions of mounting LEDs on odd-numbered rows and positions of mounting LEDs on even-numbered rows are made different from each other. For such an arrangement, it is preferred to arrange the process target areas in a zigzag alignment, rather than in a regular matrix of rows and columns.

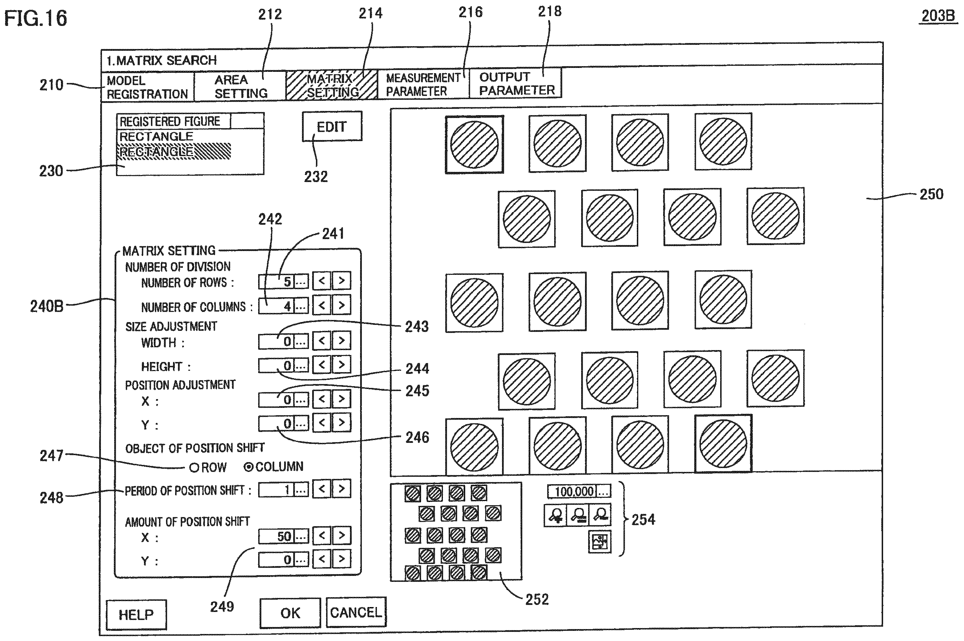

Fig. 16 shows an example of a user interface screen image 203B related to setting of process target areas provided by the image processing apparatus in accordance with the second modification of the embodiment of the present invention. As compared with the user interface screen image 203 shown in Figs. 7 to 9, user interface screen image 203B shown in Fig. 16 is different in that a matrix setting area 240B having a larger number of setting items is provided.

Matrix setting area 240B includes, in addition to the components of matrix setting area 240 shown in Figs. 7 to 9, radio buttons 247 for selecting the object of shifting the position for realizing zigzag arrangement, a numerical value input box 248 for setting a period of position shifting for realizing the zigzag arrangement, and numerical value input boxes 249 for setting the amount of position shifting for realizing the zigzag arrangement.

By selecting radio button 247, either the "row" or "column" can be selected. If "row" is selected, the position is shifted in the up/down direction of the figure, with each bank in the up/down direction used as a unit, and if "column" is selected, the position is shifted in the left/right direction of the figure, with each bank in the left/right direction used as a unit.

In numerical value input box 248, the number of rows (spatial period) of which position to be shifted in the direction selected by radio button 247 is set. As shown in Fig. 16, if "1" is set as the "position shift interval," relative shift of position is set for every other bank, that is, shift of position between the odd-numbered column and even-numbered column, is set.

By numerical value setting boxes 249, the amounts of displacement (X direction and Y direction) for shifting position are set.

In accordance with these set parameters, a plurality of process target areas is defined using the reference area as a reference. In other words, the neighboring process target areas are defined on the input image to satisfy these set parameters.

Other process steps are the same as those described with reference to the embodiment above and, therefore, detailed description thereof will not be repeated.

According to the present modification, not only a plurality of works arranged in a regular matrix of rows and columns but also a plurality of works arranged in a zigzag alignment can be collectively inspected.

### (l3: Third Modification)

In the embodiment and the first modification above, examples have been described in which process target areas of the number designated in the row and column directions are defined with respect to a rectangular reference area. In contrast, in the third modification, an example will be described in which the maximum number of process target areas is defined with respect to a reference area arbitrarily set by the user. More specifically, in the present modification, a plurality of process target areas is defined not to overlap with each other, inscribed in a reference area set to have any shape.

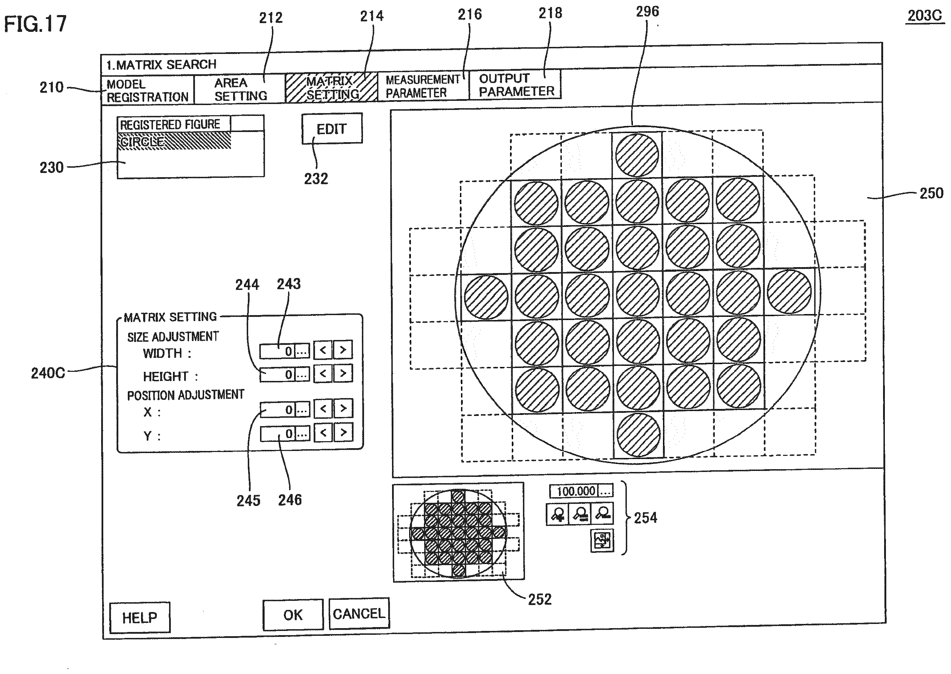

Fig. 17 shows an example of a user interface screen image 203C related to setting of process target areas provided by the image processing apparatus in accordance with the third modification of the embodiment of the present invention. User interface screen image 203C shown in Fig. 17 shows an example in which a circular reference area 296 is set for the input image displayed on image display area 250. It is noted, however, that reference area 296 is not limited thereto and it may have any shape. As shown, when reference area 296 is set to have any shape, the image processing apparatus in accordance with the present modification arranges a plurality of process target areas in rows and columns not to be overlapped with each other, inscribed in the reference area set to have any shape.

The process for setting the process target areas as described above is suitable when as many as possible works are packed in a container of which cross-sectional shape varies widely.

Other process steps are the same as those described with reference to the embodiment above and, therefore, detailed description thereof will not be repeated.

According to the present modification, not only the work set of fixed shape but also work sets of any shape can appropriately be inspected.

### (l4: Fourth Modification)

In the embodiment above, an example in which the process target areas are defined in rows and columns has been described. In the fourth embodiment, an example in which a plurality of process target areas are defined in radial manner with a point in the reference area being the center will be described.

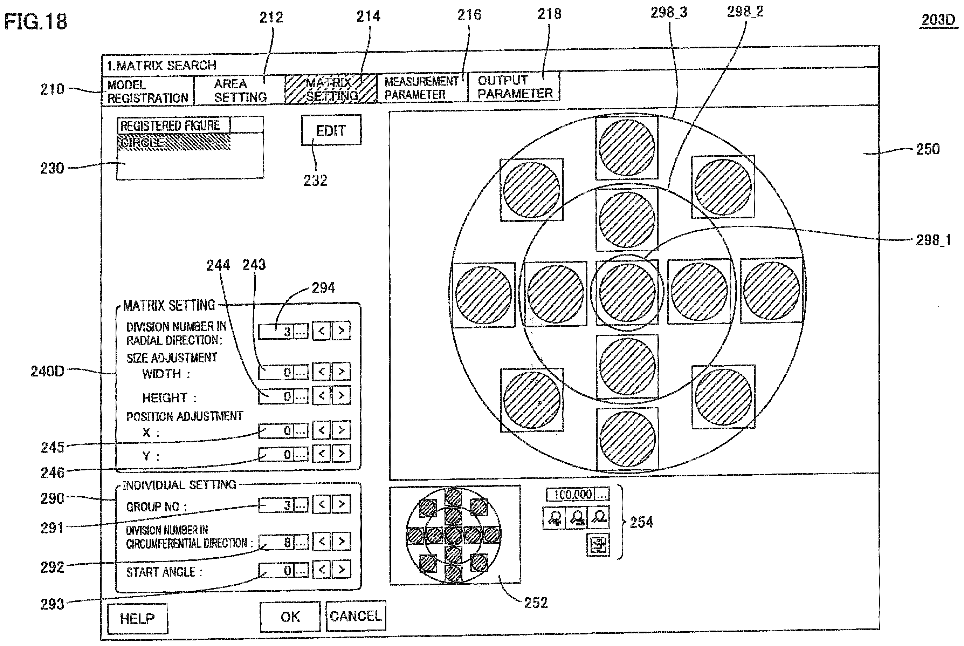

Fig. 18 shows an example of a user interface screen image 203D related to setting of process target areas provided by the image processing apparatus in accordance with a fourth modification of the embodiment of the present invention. In user interface screen image 203D shown in Fig. 18, a reference area of a circle or concentric circle is set for the input image displayed on image display area 250. The reference area is divided in the radial direction and, for each of the circles or concentric circles resulting from the division, process target areas of the number determined by a prescribed rule are defined.

More specifically, user interface screen image 203D shown in Fig. 18 is different from user interface screen image 203 shown in Figs. 7 to 9 in that a matrix setting area 240D including a larger number of setting items is provided.

Matrix setting area 240D includes, in addition to the components of matrix setting area 240 shown in Figs. 7 to 9, a numerical value input box 294 for setting the number of division in the radial direction, to define the process target areas radially.

When a numerical value is input to numerical value input box 294, the set reference area is divided in the radial direction by the input numerical value. In Fig. 18, "3" is input to numerical value input box 294 and, therefore, in the shown example, the reference area is divided by 3. As the reference area is divided in the radial direction, the display and setting of individual setting area 290 are activated.

More specifically, individual setting area 290 includes numerical value input boxes 291, 292 and 293, for setting the number of process target areas allocated to each of the divided concentric circles (or circle). In accordance with the values set in numerical value setting boxes 291, 292 and 293, process target areas are set for each of the divided areas. In numerical value setting box 291, a group number, that is, an identification number of a group corresponding to the number of division along the radial direction is set. In numerical value setting box 292, the number of division in the circumferential direction in each group is set. The number of division input to numerical value input box 292 is set as the number of division for the group of the number corresponding to the numerical value set in numerical value setting box 291. In numerical value input box 293, an angle for starting area setting is set for each group. The start angle set in numerical value input box 293 is set as the number of division for the group of the number corresponding to the numerical value set in numerical value setting box 291. Therefore, as the number of division in the circumferential direction (numerical value input box 292) and in the start angle (numerical value input box 293), a set of numerical values in accordance with the number of division in the radial direction set in numerical value setting box 294 will be input.

Other process steps are the same as those described with reference to the embodiment above and, therefore, detailed description thereof will not be repeated.

According to the present modification, a work set having works arranged radially, such as an LED lighting system having a plurality of LEDs arranged radially, can appropriately be inspected.

The foregoing and other objects, features, aspects and advantages of the present invention will become more apparent from the following detailed description of the present invention when taken in conjunction with the accompanying drawings.

### REFERENCE SIGNS LIST

1 visual sensor system, 2 work set, 3 crate, 4 photo-electric sensor, 4a light receiving unit, 4b light emitting unit, 6 conveyer mechanism, 8 image pick-up device, 100 image processing apparatus, 102 display, 104 mouse, 106 memory card, 112 main memory, 114 hard disk, 116 camera interface, 116a image buffer, 118 input interface, 120 display controller, 122 interface, 124 communication interface, 126 data reader/writer, 128 bus.

## Claims

1. An image processing apparatus (100) for executing a matching process for an input image of a plurality of items that are arranged regularly, comprising:
first setting input means (S11) for receiving registration of a model from a user;
second setting input means (S12) for receiving, from a user, a first setting of a reference area with any shape for defining a plurality of process target areas in the input image ;
third setting input means (S13) for receiving a second setting from a user for defining the plurality of process target areas, which are arranged regularly in the input image, the plurality of process target areas being defined within the reference area;
fourth setting input means (S13) for receiving from a user a third setting related to activation or inactivation of each of the plurality of process target areas as an object of execution of the matching process;
fifth setting input means (S14) for receiving a first condition from a user that is related to characteristics of the process target area to be satisfied in the matching process;
sixth setting input means (S14) for receiving a second condition from a user regarding the number of process target areas having a specific result of determination related to the satisfaction of the first condition, among the plurality of process target areas;
area defining means (S23) for defining, upon acquiring the input image, the plurality of process target areas in the acquired input image such that the process target areas satisfy the second setting;
process executing means (S24) for executing the matching process on each of the plurality of process target areas using the model registered in advance so as to determine whether each of the plurality of process target areas satisfies the first condition, the model being rotated in the matching process;
determination means (S25) for determining whether the results of determination of respective ones of the plurality of process target areas satisfy the second condition; and
output means (S26) for outputting whether the second condition is satisfied, wherein
the process executing means is configured to skip the matching process for any of the plurality of process target areas that are inactivated as the object of execution of the matching process.

2. The image processing apparatus according to claim 1, wherein
the output means is configured to output the results of determination of respective ones of the plurality of process target areas by making the manner of display different on the input image.

3. The image processing apparatus according to claim 1, further comprising
display means (102, 120) for displaying the input image and the plurality of process target areas set for the input image; wherein
the fourth setting input means is configured to specify a selected process target area among the plurality of process target areas in response to an input from an input device in connection with a display position on the display means, and to determine whether the process target area is to be activated or inactivated as an object of executing the matching process.

4. The image processing apparatus according to claim 1, wherein
the area defining means is configured to re-define the plurality of process target areas on the input image at least when a new setting of the reference area is received by the second setting input means or when a new setting for regularly defining the plurality of process target areas is received by the third setting input means.

5. The image processing apparatus according to claim 1, wherein
the area defining means is configured to define the plurality of process target areas in a matrix of rows and columns with respect to the reference area having a rectangular shape.

6. The image processing apparatus according to claim 1, wherein
the area defining means is configured to define the plurality of process target areas in a zigzag alignment.

7. The image processing apparatus according to claim 1, wherein
the area defining means is configured to define the plurality of process target areas inscribed in the reference area set to have any shape, not to overlap with each other.

8. The image processing apparatus according to claim 1, wherein
the area defining means is configured to define the plurality of process target areas radially, with a point in the reference area being the center.

9. The image processing apparatus according to any one of claims 1 to 8, wherein the setting of the reference area includes any one of the following:
(a) defining a rectangle by a start position and a last position;
(b) defining a rectangle by dragging a cursor; and
(c) defining a circular area with any size.

10. A computer-implemented image processing method of executing a matching process for an input image of a plurality of items that are arranged regularly, the method comprising the steps of:
receiving (S1 1) a registration of a model from a user;
receiving (S12), from a user, a first setting of a reference area with any shape for defining the plurality of process target areas in the input image;
receiving (S13) a second setting from a user for regularly defining the plurality of process target areas, which are arranged regularly in the input image, the plurality of process target areas being defined within the reference area;
receiving (S 13) a third setting from a user related to activation or inactivation of each of the plurality of process target areas as an object of execution of the matching process;
receiving (S14) a first condition from a user that is related to characteristics of the process target areas is satisfied in the matching process;
receiving (S 14) a second condition from a user regarding the number of process target areas having a specific result of determination related to the satisfaction of the first condition, among the plurality of process target areas;
defining (S23) , upon acquiring the input image, the plurality of process target areas on said the acquired input image such that process target areas satisfy the setting condition;
executing (S24, S25) the matching process on each of the plurality of process target areas using the model registered in advance so as to determine whether each of the plurality of process target areas satisfies the first condition, the model being rotated in the matching process;
determining (S25) whether the results of determination of respective ones of the plurality of process target areas satisfy the second condition; and
outputting (S26) whether the second condition is satisfied, wherein
the step of executing the matching process includes skipping the matching process for any of the plurality of process target areas that are inactivated as the object of execution of the matching process.

## Patentansprüche

1. Bildverarbeitungsvorrichtung (100) zum Ausführen eines Abgleichprozesses bzw. Matchingprozesses für ein Eingabebild mit mehreren Gegenständen, die regelmäßig angeordnet sind, aufweisend:
eine erste Einstellungseingabeeinrichtung (S11) zum Empfangen einer Registrierung eines Modells von einem Benutzer;
eine zweite Einstellungseingabeeinrichtung (S12) zum Empfangen, von einem Benutzer, einer ersten Einstellung eines Referenzbereichs mit einer Form zum Definieren mehrerer Prozesszielbereiche in dem Eingabebild;
eine dritte Einstellungseingabeeinrichtung (S13) zum Empfangen einer zweiten Einstellung von einem Benutzer zum Definieren der mehreren Prozesszielbereiche, die regelmäßig in dem Eingabebild angeordnet sind, wobei die mehreren Prozesszielbereiche innerhalb des Referenzbereichs definiert sind;
eine vierte Einstellungseingabeeinrichtung (S13) zum Empfangen, von einem Benutzer, einer dritten Einstellung in Bezug auf eine Aktivierung oder Inaktivierung jedes der mehreren Prozesszielbereiche als ein Objekt einer Ausführung des Abgleichprozesses;
eine fünfte Einstellungseingabeeinrichtung (S14) zum Empfangen einer ersten Bedingung von einem Benutzer, die sich auf Eigenschaften des Prozesszielbereichs bezieht, der in dem Abgleichprozess zu erfüllen ist;
eine sechste Einstellungseingabeeinrichtung (S14) zum Empfangen einer zweiten Bedingung von einem Benutzer hinsichtlich der Anzahl von Prozesszielbereichen, die ein spezifisches Bestimmungsergebnis in Bezug auf die Erfüllung der ersten Bedingung aufweisen, unter den mehreren Prozesszielbereichen;
eine Bereichsdefinitionseinrichtung (S23) zum Definieren, beim Erfassen des Eingabebilds, der mehreren Prozesszielbereiche in dem erfassten Eingabebild, so dass die Prozesszielbereiche die zweite Einstellung erfüllen;
eine Prozessausführungseinrichtung (S24) zum Ausführen des Abgleichprozesses an jedem der mehreren Prozesszielbereiche unter Verwendung des im Voraus registrierten Modells, um zu bestimmen, ob jeder der mehreren Prozesszielbereiche die erste Bedingung erfüllt, wobei das Modell in dem Abgleichprozess gedreht wird;
eine Bestimmungseinrichtung (S25) zum Bestimmen, ob die Bestimmungsergebnisse jeweiliger der mehreren Prozesszielbereiche die zweite Bedingung erfüllen; und
eine Ausgabeeinrichtung (S26) zum Ausgeben, ob die zweite Bedingung erfüllt ist, wobei
die Prozessausführungseinrichtung eingerichtet ist, den Abgleichprozess für irgendeinen der mehreren Prozesszielbereiche zu überspringen, die als das Objekt einer Ausführung des Abgleichprozesses inaktiviert sind.

2. Bildverarbeitungsvorrichtung nach Anspruch 1, wobei
die Ausgabeeinrichtung eingerichtet ist, die Bestimmungsergebnisse jeweiliger der mehreren Prozesszielbereiche auszugeben, indem die Art der Anzeige auf dem Eingabebild unterschiedlich gemacht wird.

3. Bildverarbeitungsvorrichtung nach Anspruch 1, ferner aufweisend
eine Anzeigeeinrichtung (102, 120) zum Anzeigen des Eingabebilds und der mehreren für das Eingabebild eingestellten Prozesszielbereiche; wobei
die vierte Einstellungseingabeeinrichtung eingerichtet ist, einen ausgewählten Prozesszielbereich unter den mehreren Prozesszielbereichen ansprechend auf eine Eingabe von einer Eingabevorrichtung in Verbindung mit einer Anzeigeposition auf der Anzeigeeinrichtung zu spezifizieren und zu bestimmen, ob der Prozesszielbereich als ein Objekt einer Ausführung des Abgleichprozesses aktiviert oder inaktiviert werden soll.

4. Bildverarbeitungsvorrichtung nach Anspruch 1, wobei
die Bereichsdefinitionseinrichtung eingerichtet ist, die mehreren Prozesszielbereiche auf dem Eingabebild zumindest dann neu zu definieren, wenn eine neue Einstellung des Referenzbereichs durch die zweite Einstellungseingabeeinrichtung empfangen wird oder wenn eine neue Einstellung zum regelmäßigen Definieren der mehreren Prozesszielbereiche durch die dritte Einstellungseingabeeinrichtung empfangen wird.

5. Bildverarbeitungsvorrichtung nach Anspruch 1, wobei
die Bereichsdefinitionseinrichtung eingerichtet ist, die mehreren Prozesszielbereiche in einer Matrix von Zeilen und Spalten in Bezug auf den Referenzbereich mit einer rechteckigen Form zu definieren.

6. Bildverarbeitungsvorrichtung nach Anspruch 1, wobei
die Bereichsdefinitionseinrichtung eingerichtet ist, die mehreren Prozesszielbereiche in einer Zickzack-Ausrichtung zu definieren.

7. Bildverarbeitungsvorrichtung nach Anspruch 1, wobei
die Bereichsdefinitionseinrichtung eingerichtet ist, die mehreren Prozesszielbereiche zu definieren, die in den Referenzbereich eingeschrieben sind, der so eingestellt ist, dass er eine Form aufweist, die einander nicht überlappt.

8. Bildverarbeitungsvorrichtung nach Anspruch 1, wobei
die Bereichsdefinitionseinrichtung eingerichtet ist, die mehreren Prozesszielbereiche radial zu definieren, wobei ein Punkt im Referenzbereich die Mitte ist.

9. Bildverarbeitungsvorrichtung nach einem der Ansprüche 1 bis 8, wobei das Einstellen des Referenzbereichs eines der Folgenden umfasst:
(a) Definieren eines Rechtecks durch eine Startposition und eine letzte Position;
(b) Definieren eines Rechtecks durch Ziehen eines Cursors; und
(c) Definieren eines kreisförmigen Bereichs mit einer beliebigen Größe.

10. Computerimplementiertes Bildverarbeitungsverfahren zum Ausführen eines Abgleichprozesses für ein Eingabebild mit mehreren Gegenständen, die regelmäßig angeordnet sind, wobei das Verfahren die folgenden Schritte aufweist:
Empfangen (S11) einer Registrierung eines Modells von einem Benutzer;
Empfangen (S12), von einem Benutzer, einer ersten Einstellung eines Referenzbereichs mit einer Form zum Definieren der mehreren Prozesszielbereiche in dem Eingabebild;
Empfangen (S13) einer zweiten Einstellung von einem Benutzer zum regelmäßigen Definieren der mehreren Prozesszielbereiche, die regelmäßig in dem Eingabebild angeordnet sind, wobei die mehreren Prozesszielbereiche innerhalb des Referenzbereichs definiert sind;
Empfangen (S13) einer dritten Einstellung von einem Benutzer in Bezug auf eine Aktivierung oder Inaktivierung jedes der mehreren Prozesszielbereiche als ein Objekt einer Ausführung des Abgleichprozesses;
Empfangen (S14) einer ersten Bedingung von einem Benutzer, die sich auf Eigenschaften der Prozesszielbereiche bezieht, die in dem Abgleichprozess erfüllt sind;
Empfangen (S14) einer zweiten Bedingung von einem Benutzer hinsichtlich der Anzahl von Prozesszielbereichen, die ein spezifisches Bestimmungsergebnis in Bezug auf die Erfüllung der ersten Bedingung aufweisen, unter den mehreren Prozesszielbereichen;
Definieren (S23), beim Erfassen des Eingabebilds, der mehreren Prozesszielbereiche auf dem erfassten Eingabebild, so dass die Prozesszielbereiche die Einstellungsbedingung erfüllen;
Ausführen (S24, S25) des Abgleichprozesses an jedem der mehreren Prozesszielbereiche unter Verwendung des im Voraus registrierten Modells, um zu bestimmen, ob jeder der mehreren Prozesszielbereiche die erste Bedingung erfüllt, wobei das Modell in dem Abgleichprozess gedreht wird;
Bestimmen (S25), ob die Bestimmungsergebnisse jeweiliger der mehreren Prozesszielbereiche die zweite Bedingung erfüllen; und
Ausgeben (S26), ob die zweite Bedingung erfüllt ist, wobei
der Schritt des Ausführens des Abgleichprozesses ein Überspringen des Abgleichprozesses für irgendeinen der mehreren Prozesszielbereiche umfasst, die als das Objekt einer Ausführung des Abgleichprozesses inaktiviert sind.

## Revendications

1. Appareil de traitement d'image (100) pour exécuter un processus de mise en correspondance pour une image d'entrée d'une pluralité d'éléments qui sont agencés régulièrement, comprenant :
un premier moyen d'entrée de réglage (S11) pour recevoir un enregistrement d'un modèle d'un utilisateur ;
un deuxième moyen d'entrée de réglage (S12) pour recevoir, d'un utilisateur, un premier réglage d'une zone de référence avec une forme quelconque pour définir une pluralité de zones cibles de processus dans l'image d'entrée ;
un troisième moyen d'entrée de réglage (S13) pour recevoir un deuxième réglage d'un utilisateur pour définir la pluralité de zones cibles de processus, qui sont agencées régulièrement dans l'image d'entrée, la pluralité de zones cibles de processus étant définies dans la zone de référence ;
un quatrième moyen d'entrée de réglage (S13) pour recevoir d'un utilisateur un troisième réglage lié à l'activation ou l'inactivation de chacune de la pluralité de zones cibles de processus en tant qu'objet d'exécution du processus de mise en correspondance ;
un cinquième moyen d'entrée de réglage (S14) pour recevoir une première condition d'un utilisateur qui est liée à des caractéristiques de la zone cible de processus à satisfaire dans le processus de mise en correspondance ;
un sixième moyen d'entrée de réglage (S14) pour recevoir une deuxième condition d'un utilisateur concernant le nombre de zones cibles de processus ayant un résultat de détermination spécifique lié à la satisfaction de la première condition, parmi la pluralité de zones cibles de processus ;
un moyen de définition de zone (S23) pour définir, lors de l'acquisition de l'image d'entrée, la pluralité de zones cibles de processus dans l'image d'entrée acquise de sorte que les zones cibles de processus satisfont au deuxième réglage ;
un moyen d'exécution de processus (S24) pour exécuter le processus de mise en correspondance sur chacune de la pluralité de zones cibles de processus en utilisant le modèle enregistré à l'avance de manière à déterminer si chacune de la pluralité de zones cibles de processus satisfait à la première condition, le modèle étant tourné dans le processus de mise en correspondance ;
un moyen de détermination (S25) pour déterminer si les résultats de détermination de zones respectives de la pluralité de zones cibles de processus satisfont à la deuxième condition ; et
un moyen de sortie (S26) pour délivrer en sortie si la deuxième condition est satisfaite, dans lequel
le moyen d'exécution de processus est configuré pour sauter le processus de mise en correspondance pour l'une quelconque de la pluralité de zones cibles de processus qui sont inactivées en tant qu'objet d'exécution du processus de mise en correspondance.

2. Appareil de traitement d'image selon la revendication 1, dans lequel
le moyen de sortie est configuré pour délivrer en sortie les résultats de détermination de zones respectives de la pluralité de zones cibles de processus en rendant la manière d'affichage différente sur l'image d'entrée.

3. Appareil de traitement d'image selon la revendication 1, comprenant en outre
un moyen d'affichage (102, 120) pour afficher l'image d'entrée et la pluralité de zones cibles de processus réglées pour l'image d'entrée ; dans lequel
le quatrième moyen d'entrée de réglage est configuré pour spécifier une zone cible de processus sélectionnée parmi la pluralité de zones cibles de processus en réponse à une entrée provenant d'un dispositif d'entrée en relation avec une position d'affichage sur le moyen d'affichage, et pour déterminer si la zone cible de processus doit être activée ou inactivée en tant qu'objet d'exécution du processus de mise en correspondance.

4. Appareil de traitement d'image selon la revendication 1, dans lequel
le moyen de définition de zone est configuré pour redéfinir la pluralité de zones cibles de processus sur l'image d'entrée au moins lorsqu'un nouveau réglage de la zone de référence est reçu par le deuxième moyen d'entrée de réglage ou lorsqu'un nouveau réglage pour définir régulièrement la pluralité de zones cibles de processus est reçu par le troisième moyen d'entrée de réglage.

5. Appareil de traitement d'image selon la revendication 1, dans lequel
le moyen de définition de zone est configuré pour définir la pluralité de zones cibles de processus dans une matrice de rangées et de colonnes par rapport à la zone de référence ayant une forme rectangulaire.

6. Appareil de traitement d'image selon la revendication 1, dans lequel
le moyen de définition de zone est configuré pour définir la pluralité de zones cibles de processus dans un alignement en zigzag.

7. Appareil de traitement d'image selon la revendication 1, dans lequel
le moyen de définition de zone est configuré pour définir la pluralité de zones cibles de processus inscrites dans la zone de référence réglée pour avoir une forme quelconque, pour ne pas se chevaucher les unes les autres.

8. Appareil de traitement d'image selon la revendication 1, dans lequel
le moyen de définition de zone est configuré pour définir la pluralité de zones cibles de processus radialement, avec un point dans la zone de référence étant le centre.

9. Appareil de traitement d'image selon l'une quelconque des revendications 1 à 8, dans lequel le réglage de la zone de référence comprend l'un quelconque des éléments suivants :
(a) la définition d'un rectangle par une position de début et une dernière position ;
(b) la définition d'un rectangle en faisant glisser un curseur ; et
(c) la définition d'une zone circulaire avec une taille quelconque.

10. Procédé de traitement d'image mis en oeuvre par ordinateur pour exécuter un processus de mise en correspondance pour une image d'entrée d'une pluralité d'éléments qui sont agencés régulièrement, le procédé comprenant les étapes de :
la réception (S 11) d'un enregistrement d'un modèle d'un utilisateur ;
la réception (S12), d'un utilisateur, d'un premier réglage d'une zone de référence avec une forme quelconque pour définir la pluralité de zones cibles de processus dans l'image d'entrée ;
la réception (S13) d'un deuxième réglage d'un utilisateur pour définir régulièrement la pluralité de zones cibles de processus, qui sont agencées régulièrement dans l'image d'entrée, la pluralité de zones cibles de processus étant définies dans la zone de référence ;
la réception (S13) d'un troisième réglage d'un utilisateur lié à l'activation ou l'inactivation de chacune de la pluralité de zones cibles de processus en tant qu'objet d'exécution du processus de mise en correspondance ;
la réception (S14) d'une première condition d'un utilisateur qui est liée à des caractéristiques des zones cibles de processus qui sont satisfaites dans le processus de mise en correspondance ;
la réception (S14) d'une deuxième condition d'un utilisateur concernant le nombre de zones cibles de processus ayant un résultat de détermination spécifique lié à la satisfaction de la première condition, parmi la pluralité de zones cibles de processus ;
la définition (S23), lors de l'acquisition de l'image d'entrée, de la pluralité de zones cibles de processus sur ladite image d'entrée acquise de sorte que les zones cibles de processus satisfont à la condition de réglage ;
l'exécution (S24, S25) du processus de mise en correspondance sur chacune de la pluralité de zones cibles de processus en utilisant le modèle enregistré à l'avance de manière à déterminer si chacune de la pluralité de zones cibles de processus satisfait à la première condition, le modèle étant tourné dans le processus de mise en correspondance ;
la détermination (S25) si les résultats de détermination de zones respectives de la pluralité de zones cibles de processus satisfont à la deuxième condition ; et
la délivrance en sortie (S26) si la deuxième condition est satisfaite, dans lequel
l'étape d'exécution du processus de mise en correspondance comprend le saut du processus de mise en correspondance pour l'une quelconque de la pluralité de zones cibles de processus qui sont inactivées en tant qu'objet d'exécution du processus de mise en correspondance.
